# EUROPEAN PATENT APPLICATION

(11) **EP 4 672 654 A1**
(43) Date of publication of application: **31.12.2025**
(21) Application number: 25182873.7
(22) Date of filing: 16.06.2025
(51) Int. Cl.: H04L 5/00, H04B 7/08, H04W 72/00, H04B 1/10

(54) **METHOD, APPARATUS AND COMPUTER PROGRAM**

(30) Priority: 28.06.2024 GB 202409392
(71) Applicant: Nokia Technologies Oy, 02610 Espoo (FI)
(72) Inventor: RYSGAARD, Bent Henneberg, Aalborg (DK); DALSGAARD, Lars, Oulu (FI); HEJSELBAEK, Johannes, Holstebro (DK); NIELSEN, Kim, Storvorde (DK)
(74) Representative: Nokia EPO representatives

(57) **Abstract**

There is provided a communication device comprising: means for, based on receiving a configuration of two component carriers for non-contiguous intra-band carrier aggregation, performing measurements across a bandwidth between the two component carriers to determine first measurements, and means for performing measurements on the two component carriers to determine second measurements. The communication device also comprises means for, based on the first and second measurements, switching from operating according to a first mode to a second mode at the communication device, and means for activating a further component carrier, so that a receive chain that has become available due to the switching to the second mode is utilised for receiving the further component carrier at the communication device. The communication device also comprises means for, based on third measurements, switching to operate according to the first mode at the communication device, such that the receive chain utilised for receiving the further component carrier is no longer available, and means for sending, to the network entity, an indication that the further component carrier has been de-activated at the communication device.

## Description

### TECHNICAL FIELD

Various examples of this disclosure relate to methods, apparatuses, and computer programs for a communication network.

### BACKGROUND

A communication network can be seen as a facility that enables communications between two or more communication devices or provides communication devices access to a data network. A mobile or wireless communication network is one example of a communication network. A communication device may be provided with a service by an application server.

Such communication networks operate in accordance with standards such as those provided by 3GPP (Third Generation Partnership Project) or ETSI (European Telecommunications Standards Institute). Examples of standards are the so-called 5G (5th Generation) standards provided by 3GPP.

### SUMMARY

Some examples of this disclosure will be described with respect to certain aspects. These aspects are not intended to indicate key or essential features of the embodiments of this disclosure, nor are they intended to be used to limit the scope thereof. Other features, aspects, and elements will be readily apparent to a person skilled in the art in view of this disclosure. For example, it should be appreciated that further aspects may be provided by the combination of any two or more of the various aspects described below.

According to a first aspect, there is provided a communication device comprising: means for sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; means for, based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; means for performing measurements on the two component carriers to determine second measurements, wherein the communication device is operating according to the first mode; means for, based on the first and second measurements, switching to operate according to the second mode at the communication device; and means for receiving, from the network entity, indication to activate a further component carrier at the communication device, so that a receive chain that has become available due to the switching to the second mode is utilised for receiving the further component carrier at the communication device.

According to a second aspect, there is provided a method performed by a communication device, the method comprising: sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; performing measurements on the two component carriers to determine second measurements, wherein the communication device is operating according to the first mode; based on the first and second measurements, switching to operate according to the second mode at the communication device; and receiving, from the network entity, indication to activate a further component carrier at the communication device, so that a receive chain that has become available due to the switching to the second mode is utilised for receiving the further component carrier at the communication device.

According to a third aspect, there is provided a computer program comprising instructions, which when executed by a communication device, cause the communication device to perform at least the following: sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; performing measurements on the two component carriers to determine second measurements, wherein the communication device is operating according to the first mode; based on the first and second measurements, switching to operate according to the second mode at the communication device; and receiving, from the network entity, indication to activate a further component carrier at the communication device, so that a receive chain that has become available due to the switching to the second mode is utilised for receiving the further component carrier at the communication device.

According to a fourth aspect, there is provided a communication device comprising: at least one processor, and at least one memory storing instructions that, when executed by the at least one processor, cause the communication device to perform: sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; performing measurements on the two component carriers to determine second measurements, wherein the communication device is operating according to the first mode; based on the first and second measurements, switching to operate according to the second mode at the communication device; and receiving, from the network entity, indication to activate a further component carrier at the communication device, so that a receive chain that has become available due to the switching to the second mode is utilised for receiving the further component carrier at the communication device.

According to a fifth aspect, there is provided a communication device comprising: circuitry configured to perform: sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; circuitry configured to perform: based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; circuitry configured to perform: performing measurements on the two component carriers to determine second measurements, wherein the communication device is operating according to the first mode; circuitry configured to perform: based on the first and second measurements, switching to operate according to the second mode at the communication device; and circuitry configured to perform: receiving, from the network entity, indication to activate a further component carrier at the communication device, so that a receive chain that has become available due to the switching to the second mode is utilised for receiving the further component carrier at the communication device.

The following are applicable to each (e.g., one or more, including all) of the above first to fifth aspects.

In some examples, the switching from operating according to the first mode to the second mode at the communication device is based on comparing: the first measurements to a first threshold, and the second measurements to a second threshold.

In some examples, the switching from operating according to the first mode to the second mode at the communication device is based on determining that the first measurements are above the first threshold and the second measurements are below the second threshold.

In some examples, the communication device is caused to perform: sending, to the network entity, information related to the switching from operating according to the first mode to the second mode at the communication device.

In some examples, the information comprises an indication of hardware resources that are available at the communication device.

In some examples, the communication device is caused to perform: receiving, from the network entity, an indication of a reconfiguration related to the further component carrier.

In some examples, the communication device is caused to perform: sending, to the network entity, information related to the first and second measurements, wherein the switching from operating according to the first mode to the second mode at the communication device is based on an indication received from the network entity.

In some examples, the communication device is caused to perform: performing measurements across the bandwidth between the two components carriers to determine third measurements.

In some examples, the communication device is caused to perform: based on comparing the third measurements to a third threshold, switching from operating according to the second mode to a third mode at the communication device.

In some examples, the communication device is caused to perform: performing measurements on the two component carriers to determine fourth measurements; and based on the third and fourth measurements, switching to operate according to the first mode at the communication device.

In some examples, the communication device is caused to perform: sending, to the network entity, information related to the switching to operate according to the first mode at the communication device.

In some examples, the communication device is caused to perform: receiving, from the network entity, an indication to de-activate the further component carrier from the configuration at the communication device.

In some examples, at least one of: the indication to activate the further component carrier, or the indication to de-activate the further component carrier, is comprised in a medium access control control element.

In some examples, the communication device is caused to perform: receiving, from the network entity, the configuration of the two component carriers for non-contiguous intra-band carrier aggregation; and based on receiving an indication from the network entity, activating the configuration of the two component carriers for non-contiguous intra-band carrier aggregation.

According to a sixth aspect, there is provided a network entity comprising: means for receiving, from a communication device, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; means for sending, to the communication device, a configuration of two component carriers for non-contiguous intra-band carrier aggregation, wherein the configuration is based on the information related to non-contiguous intra-band combinations that are supported by the communication device; means for receiving, from the communication, information related to first measurements and second measurements that have been performed by the communication device, wherein the first measurements are associated with measurements across a bandwidth between the two component carriers, and wherein the second measurements are associated with measurements on the two component carriers; and means for, based on the information related to the first measurements and the second measurements, sending, to the communication device, an indication to activate a further component carrier at the communication device, so that a receive chain that has become available due to the switching to the second mode is utilised for receiving the further component carrier at the communication device.

According to a seventh aspect, there is provided a method performed by a network entity, the method comprising: receiving, from a communication device, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; sending, to the communication device, a configuration of two component carriers for non-contiguous intra-band carrier aggregation, wherein the configuration is based on the information related to non-contiguous intra-band combinations that are supported by the communication device; receiving, from the communication, information related to first measurements and second measurements that have been performed by the communication device, wherein the first measurements are associated with measurements across a bandwidth between the two component carriers, and wherein the second measurements are associated with measurements on the two component carriers; and based on the information related to the first measurements and the second measurements, sending, to the communication device, an indication to activate a further component carrier at the communication device, so that a receive chain that has become available due to the switching to the second mode is utilised for receiving the further component carrier at the communication device.

According to an eight aspect, there is provided a computer program comprising instructions, which when executed by a network entity, cause the network entity to perform at least the following: receiving, from a communication device, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; sending, to the communication device, a configuration of two component carriers for non-contiguous intra-band carrier aggregation, wherein the configuration is based on the information related to non-contiguous intra-band combinations that are supported by the communication device; receiving, from the communication, information related to first measurements and second measurements that have been performed by the communication device, wherein the first measurements are associated with measurements across a bandwidth between the two component carriers, and wherein the second measurements are associated with measurements on the two component carriers; and based on the information related to the first measurements and the second measurements, sending, to the communication device, an indication to activate a further component carrier at the communication device, so that a receive chain that has become available due to the switching to the second mode is utilised for receiving the further component carrier at the communication device.

According to a ninth aspect, there is provided a network entity comprising: at least one processor, and at least one memory storing instructions that, when executed by the at least one processor, cause the network entity to perform: receiving, from a communication device, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; sending, to the communication device, a configuration of two component carriers for non-contiguous intra-band carrier aggregation, wherein the configuration is based on the information related to non-contiguous intra-band combinations that are supported by the communication device; receiving, from the communication, information related to first measurements and second measurements that have been performed by the communication device, wherein the first measurements are associated with measurements across a bandwidth between the two component carriers, and wherein the second measurements are associated with measurements on the two component carriers; and based on the information related to the first measurements and the second measurements, sending, to the communication device, an indication to activate a further component carrier at the communication device, so that a receive chain that has become available due to the switching to the second mode is utilised for receiving the further component carrier at the communication device.

According to a tenth aspect, there is provided a network entity comprising: circuitry configured to perform: receiving, from a communication device, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; circuitry configured to perform: sending, to the communication device, a configuration of two component carriers for non-contiguous intra-band carrier aggregation, wherein the configuration is based on the information related to non-contiguous intra-band combinations that are supported by the communication device; circuitry configured to perform: receiving, from the communication, information related to first measurements and second measurements that have been performed by the communication device, wherein the first measurements are associated with measurements across a bandwidth between the two component carriers, and wherein the second measurements are associated with measurements on the two component carriers; and circuitry configured to perform: based on the information related to the first measurements and the second measurements, sending, to the communication device, an indication to activate a further component carrier at the communication device, so that a receive chain that has become available due to the switching to the second mode is utilised for receiving the further component carrier at the communication device.

The following are applicable to each (e.g., one or more, including all) of the above sixth to tenth aspects.

In some examples, the information related to the first measurements and the second measurements comprises at least one of: an indication that the communication device has switched to operating according to the second mode, or information related to hardware resources that are available at the communication device.

In some examples, the network entity is caused to perform: based on the information related to the first measurements and the second measurements, determining that the communication device is to switch to operating according to the second mode; and sending, to the communication device, an indication to switch to operate according to the second mode.

In some examples, the determining is further based on comparing: the first measurements to a first threshold, and the second measurements to a second threshold.

In some examples, it is determined that the communication device should switch to the second mode when it is determined that the first measurements are above the first threshold and the second measurements are below the second threshold.

In some examples, the network entity is caused to perform: receiving, from the communication device, an indication that the communication device has switched to operate according to the first mode.

In some examples, the network entity is caused to perform: based on the indication that the communication device has switched to operate according to the first mode, sending, to the communication device, an indication to de-activate the further component carrier at the communication device.

In some examples, the network entity is caused to perform: receiving, from the communication device, information related to at least one of: third measurements, or fourth measurements, performed by the communication device, wherein the third measurements are associated with measurements across a bandwidth between the two component carriers, and wherein the fourth measurements are associated with measurements on the two component carriers.

In some examples, the network entity is caused to perform at least one of the following: based on the information related to at least one of: the third measurements, or the fourth measurements, sending, to the communication device, an indication to switch to the first mode; or based on the information related to at least one of: the third measurements, or the fourth measurements, sending, to the communication device, an indication to de-activate the further component carrier at the communication device.

According to a eleventh aspect, there is provided a communication device comprising: means for sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; means for, based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; means for performing measurements on the two component carriers to determine second measurements, wherein the communication device is operating according to the first mode; means for, based on the first and second measurements, switching from operating according to the first mode to the second mode at the communication device; means for activating a further component carrier, so that a receive chain that has become available due to the switching to the second mode is utilised for receiving the further component carrier at the communication device; means for performing measurements on the two component carriers to determine third measurements; means for, based on the third measurements, switching to operate according to the first mode at the communication device, such that the receive chain utilised for receiving the further component carrier is no longer available; and means for sending, to the network entity, an indication that the further component carrier has been de-activated at the communication device.

According to a twelfth aspect, there is provided a method performed by a communication device comprising: sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; performing measurements on the two component carriers to determine second measurements, wherein the communication device is operating according to the first mode; based on the first and second measurements, switching from operating according to the first mode to the second mode at the communication device; activating a further component carrier, so that a receive chain that has become available due to the switching to the second mode is utilised for receiving the further component carrier at the communication device; performing measurements on the two component carriers to determine third measurements; based on the third measurements, switching to operate according to the first mode at the communication device, such that the receive chain utilised for receiving the further component carrier is no longer available; and sending, to the network entity, an indication that the further component carrier has been de-activated at the communication device.

According to a thirteenth aspect, there is provided a computer program comprising instructions, which when executed by an communication device, cause the communication device to perform at least the following: sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; performing measurements on the two component carriers to determine second measurements, wherein the communication device is operating according to the first mode; based on the first and second measurements, switching from operating according to the first mode to the second mode at the communication device; activating a further component carrier, so that a receive chain that has become available due to the switching to the second mode is utilised for receiving the further component carrier at the communication device; performing measurements on the two component carriers to determine third measurements; based on the third measurements, switching to operate according to the first mode at the communication device, such that the receive chain utilised for receiving the further component carrier is no longer available; and sending, to the network entity, an indication that the further component carrier has been de-activated at the communication device.

According to a fourteenth aspect, there is provided a communication device comprising: at least one processor, and at least one memory storing instructions that, when executed by the at least one processor, cause the communication device to perform: sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; performing measurements on the two component carriers to determine second measurements, wherein the communication device is operating according to the first mode; based on the first and second measurements, switching from operating according to the first mode to the second mode at the communication device; activating a further component carrier, so that a receive chain that has become available due to the switching to the second mode is utilised for receiving the further component carrier at the communication device; performing measurements on the two component carriers to determine third measurements; based on the third measurements, switching to operate according to the first mode at the communication device, such that the receive chain utilised for receiving the further component carrier is no longer available; and sending, to the network entity, an indication that the further component carrier has been de-activated at the communication device.

According to a fifteenth aspect, there is provided a communication device comprising: circuitry configured to perform: sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; circuitry configured to perform: based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; circuitry configured to perform: performing measurements on the two component carriers to determine second measurements, wherein the communication device is operating according to the first mode; circuitry configured to perform: based on the first and second measurements, switching from operating according to the first mode to the second mode at the communication device; circuitry configured to perform: activating a further component carrier, so that a receive chain that has become available due to the switching to the second mode is utilised for receiving the further component carrier at the communication device; circuitry configured to perform: performing measurements on the two component carriers to determine third measurements; circuitry configured to perform: based on the third measurements, switching to operate according to the first mode at the communication device, such that the receive chain utilised for receiving the further component carrier is no longer available; and circuitry configured to perform: sending, to the network entity, an indication that the further component carrier has been de-activated at the communication device.

The following are applicable to each (e.g., one or more, including all) of the above eleventh to fifteenth aspects.

In some examples, the communication device is caused to perform: sending, to the network entity, an indication that the further component carrier has been activated at the communication device.

In some examples, the communication device is caused to perform: receiving, from the network entity, an indication to activate the further component carrier, wherein the activating of the further component carrier is performed in response to receiving the indication.

In some examples, at least one of: the indication that the further component carrier has been activated, the indication to activate the further component carrier, or the indication that the further component carrier has been de-activated, is comprised in a medium access control control element.

In some examples, the switching from operating according to the first mode to the second mode at the communication device is based on comparing: the first measurements to a first threshold, and the second measurements to a second threshold.

In some examples, the switching from operating according to the first mode to the second mode at the communication device is based on determining that the first measurements are above the first threshold and the second measurements are below the second threshold.

In some examples, the communication device is caused to perform: sending, to the network entity, information related to the switching from operating according to the first mode to the second mode at the communication device.

In some examples, the information comprises an indication of hardware resources that are available at the communication device.

In some examples, the communication device is caused to perform: receiving, from the network entity, information related to a configuration for a further component carrier, wherein the further component carrier is to be received by the communication device.

In some examples, the communication device is caused to perform: sending, to the network entity, information related to the first and second measurements, wherein the switching from operating according to the first mode to the second mode at the communication device is based on an indication received from the network entity.

In some examples, the communication device is caused to perform: performing measurements across the bandwidth between the two components carriers to determine fourth measurements.

In some examples, the communication device is caused to perform: based on comparing the fourth measurements to a fourth threshold, switching from operating according to the second mode to a third mode at the communication device.

In some examples, the communication device is caused to perform: receiving, from the network entity, the configuration of the two component carriers for non-contiguous intra-band carrier aggregation; and based on receiving an indication from the network entity, activating the configuration of the two component carriers for non-contiguous intra-band carrier aggregation.

A computer product stored on a medium may cause an apparatus to perform the methods as described herein.

A non-transitory computer readable medium comprising program instructions, that, when executed by an apparatus, cause the apparatus to perform the methods as described herein.

An electronic device may comprise apparatus as described herein.

Various other aspects and further embodiments are also described in the following detailed description and in the attached claims.

According to some aspects, there is provided the subject matter of the independent claims. Some further aspects are defined in the dependent claims. The embodiments that do not fall under the scope of the claims are to be interpreted as examples useful for understanding the disclosure.

### List of Abbreviations:

| | | | |
|---|---|---|---|
| AF: | Application Function | AMF: | Access and Mobility Management Function |
| AN: | Access Network | BS: | Base Station |
| CA: | Carrier aggregation | CC: | Component carrier |
| CN: | Core Network | DL: | Downlink |
| eNB: | eNodeB | gNB: | gNodeB |
| IloT: | Industrial Internet of Things | LTE: | Long Term Evolution |
| NEF: | Network Exposure Function | NG-RAN: | Next Generation Radio Access Network |
| NF: | Network Function | NR: | New Radio |
| NRF: | Network Repository Function | NW: | Network |
| MAC: | Medium access control | MAC CE: | MAC control element |
| MS: | Mobile Station | PCF | Policy Control Function |
| PLMN: | Public Land Mobile Network | RAN: | Radio Access Network |
| RF: | Radio Frequency | RRC: | Radio resource control |
| SMF: | Session Management Function | UE: | User Equipment |
| UDR: | Unified Data Repository | UDM: | Unified Data Management |
| UL: | Uplink | UPF: | User Plane Function |
| 3GPP: | 3^{rd} Gen. Partnership Project | 5G: | 5^{th} Generation |
| 5GC: | 5G Core network | 5G-AN: | 5G Radio Access Network |
| 5GS: | 5G System | | |

### BRIEF DESCRIPTION OF DRAWINGS

Some examples will now be described, by way of illustrative and non-limiting example only, with reference to the accompanying drawings in which:
FIG. 1 shows a schematic representation of a 5G communication system;
FIG. 2 shows a schematic representation of an apparatus for the 5G communication system of FIG. 1;
FIG. 3 shows a schematic representation of a communication device;
FIG. 4 shows a schematic representation of a communication system using non-contiguous intra-band carrier aggregation;
FIG. 5 shows a schematic representation of a communication system using non-contiguous intra-band carrier aggregation with reduced resource usage;
FIG. 6 shows example graphical representations of non-contiguous intra-band carrier aggregation;
FIG. 7 shows a schematic representation of transitions between modes of operation at a communication device;
FIG. 8 shows an example signalling and operations diagram between a communication device and a network entity for non-contiguous intra-band carrier aggregation;
FIG. 9 shows an example signalling and operations diagram between a communication device and a network entity for non-contiguous intra-band carrier aggregation;
FIG. 10 shows an example signalling and operations diagram between a communication device and a network entity for non-contiguous intra-band carrier aggregation;
FIG. 11 shows an example signalling and operations diagram between a communication device and a network entity for non-contiguous intra-band carrier aggregation;
FIG. 12 shows an example method flow diagram performed by an apparatus;
FIG. 13 shows another example method flow diagram performed by an apparatus;
FIG. 14 shows another example method flow diagram performed by an apparatus; and
FIG. 15 shows a schematic representation of an apparatus.

### DETAILED DESCRIPTION

In communication systems, such as 5G systems, carrier aggregation (CA) is a technique that is used to increase the data rate per user (or per device) by having multiple frequency blocks (referred to as component carriers (CCs)) that are assigned to the same user. The maximum possible data rate per user is increased the more CCs are assigned to that user.

Dependent on the relative positions of different CCs, there are three different types of CA. When CCs are contiguous and are located within the same frequency band, then this is often referred to as contiguous intra-band CA. In this context, 'contiguous' CCs are CCs that are next to each other (in terms of frequency), such that there is no gap or bandwidth (BW) between the two contiguous CCs. When CCs are in the same frequency band, but are separated by a (frequency) gap, then this is often referred to as non-contiguous intra-band CA. When CCs are located in different frequency bands, then this is often referred to as inter-band CA. From a baseband perspective, there are no differences between the three types of CA described above. The complexity from a radio frequency (RF) perspective is increased in the case of inter-band CA, as described above.

It has been suggested in a 3GPP work item that methods should be determined for reducing the number of UE receive (Rx) chains (e.g. 1 or 2) that are needed for a single downlink (DL) band containing two non-contiguous CCs within a CA combination for a co-located scenario. This could consider which RF requirements could be adjusted for a co-located scenario, including the possibility of multi operator (i.e. shared RAN), the ability to semi-statically switch hardware (HW) resources (i.e., Rx chains) between bands, the impacts on DL performance, and any means for a UE to inform the NW of new CA configuration that the UE can support with adjusted RF requirements.

When configuring CA for communication devices (such as a UE), there is signalling performed between the network (NW) and the UE. Firstly, the UE sends, to the NW, UECapabilitylnformation with an indication of all potential band combinations including when the UE is capable of non-contiguous intra-band CC combinations. A band combination is a combination of frequency segments inside different (named) ranges or bands. The UECapabilitylnformation may comprise all channel combinations supported by the UE, including inter-band combinations, as well as contiguous and non-contiguous. A non-contiguous intra-band CA connection can then be established between the UE and the NW. The NW then sends, to the UE, an RRCReconfiguration message with a configuration of two CCs for non-contiguous intra-band CA, with a setup of separate (HW) resources per CC. The UE then sends, to the NW, an RRCReconfigurationComplete message to acknowledge the updated configuration.

When a UE and NW have an established non-contiguous intra-band CA communication session ongoing, the UE may utilise different HW resources in order to receive different CCs. The HW resources used to receive the CCs may change during the communication session.

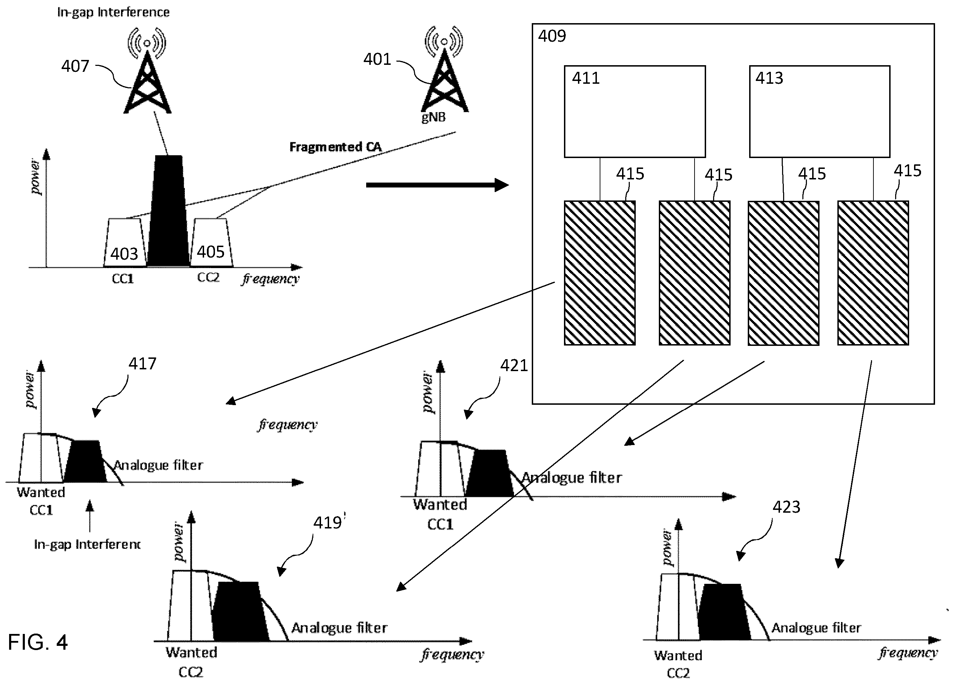

FIG. 4 shows a schematic representation of a communication system using non-contiguous intra-band carrier aggregation.

There is a network entity (e.g., gNB) 401 which configures a first CC (CC1) 403 and second CC (CC2) 405 for a UE 409. There is a frequency gap between CC1 403 and CC2 405, which means that the configuration is non-contiguous intra-band CA. There may be interference in the frequency gap between CC1 403 and CC2 405. The interference may be caused by a further gNB 407, as depicted in FIG. 4. In other examples, any gNB may cause the interference, including gNB 401. This is because network operators may share infrastructure (e.g., shared RAN). As depicted in FIG. 4, the gNB 401 transmits CC1 403 and CC2 405 to the UE 409.

The UE 409 comprises a front-end module 411 and a diversity module 413. The front-end module 411 is connected to two receive chains (or receive branches) 415 of the UE 409. Receive chains associated with the front-end module 411 may be referred to a main receiver receive chains. The diversity module 413 is connected to two receive chains 415. Receive chains associated with the diversity module 413 may be referred to as diversity receive chains. The receive chains of the UE are hardware (HW) resources of the UE. The UE 409 comprises four receive chains, in this example. A UE would likely comprise more than four receive chains in practice, but for simplicity, four receive chains are depicted in FIG. 4.

In FIG. 4, the UE 409 utilises each of the four receive chains 415 to receive CC1 403 and CC2 405 from the gNB 401. The four receive chains 415 are shaded to indicate that they are being used (i.e., not available).

A first graph 417 is associated with a first of the four receive chains 415. The first graph 417 shows that the UE is receiving CC1 utilising the first of the four receive chains 415. A second graph 419 is associated with a second of the four receive chains 415. The second graph 419 shows that the UE is receiving CC2 utilising the second of the four receive chains 415. A third graph 421 is associated with a third of the four receive chains 415. The third graph 421 shows that the UE is receiving CC1 utilising the third of the four receive chains 415. A fourth graph 423 is associated with a fourth of the four receive chains 415. The fourth graph 423 shows that the UE is receiving CC2 utilising the fourth of the four receive chains 415. In this manner, the receive chains associated with both the front-end module 411 and the diversity module 413 are being used to receive CC1 403 and CC2 405.

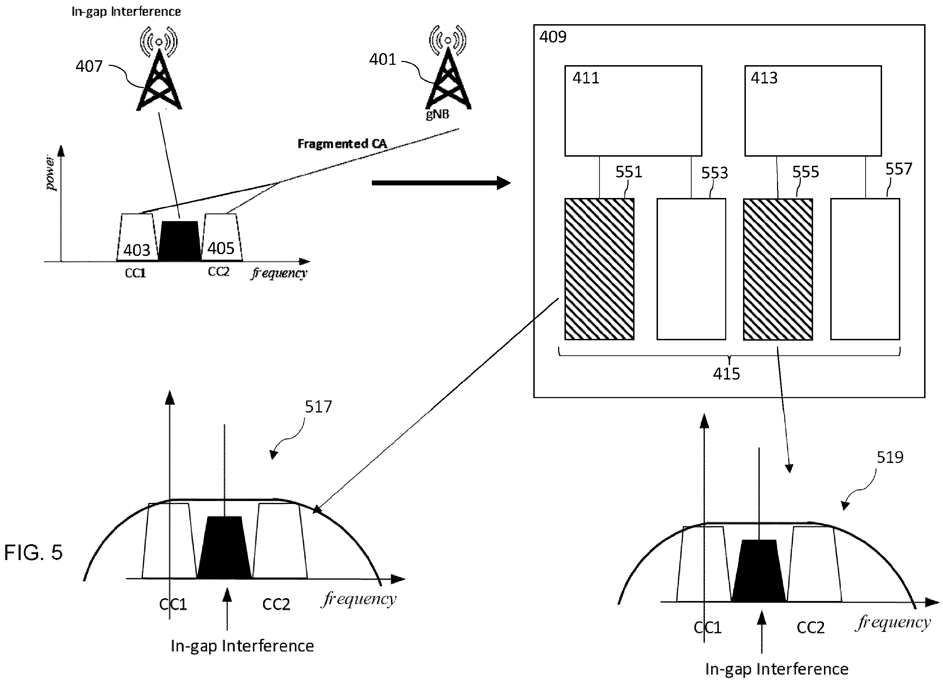

In some scenarios, it may be that the interference in the bandwidth between the two CCs is sufficiently low enough, and the quality of the CCs being received is high enough, that CC1 403 and CC2 405 may be received using a reduced number of HW resources at the UE. This is depicted in FIG. 5.

FIG. 5 shows a schematic representation of a communication system using non-contiguous intra-band carrier aggregation with reduced resource usage.

As depicted in FIG. 5, the gNB 401 transmits CC1 403 and CC2 405 to the UE 409. In this example, the UE 409 has determined that using two of the four receive chains 415 would be sufficient for receiving CC1 403 and CC2 405.

A first receive chain 551 of the four receive chains 415 is utilised for receiving CC1 403 and CC2 405, in addition to the in-gap interference. This is graphically represented in a fifth graph 517. A third receive chain 555 of the four receive chains 415 is also utilised for receiving CC1 403 and CC2 405, in addition to the in-gap interference. This is graphically represented in a sixth graph 519. A second receive chain 553 and a fourth receive chain 557 are now available (or free). The receive chains 553, 557 are depicted without shading to indicate that they are free (i.e., not currently used for receiving a CC). In the example of FIG. 5, one of the receive chains associated with the front-end module 411 is available (i.e., the second receive chain 553) and one of the receive chains associated with the diversity module 413 is available (i.e., the fourth receive chain 557).

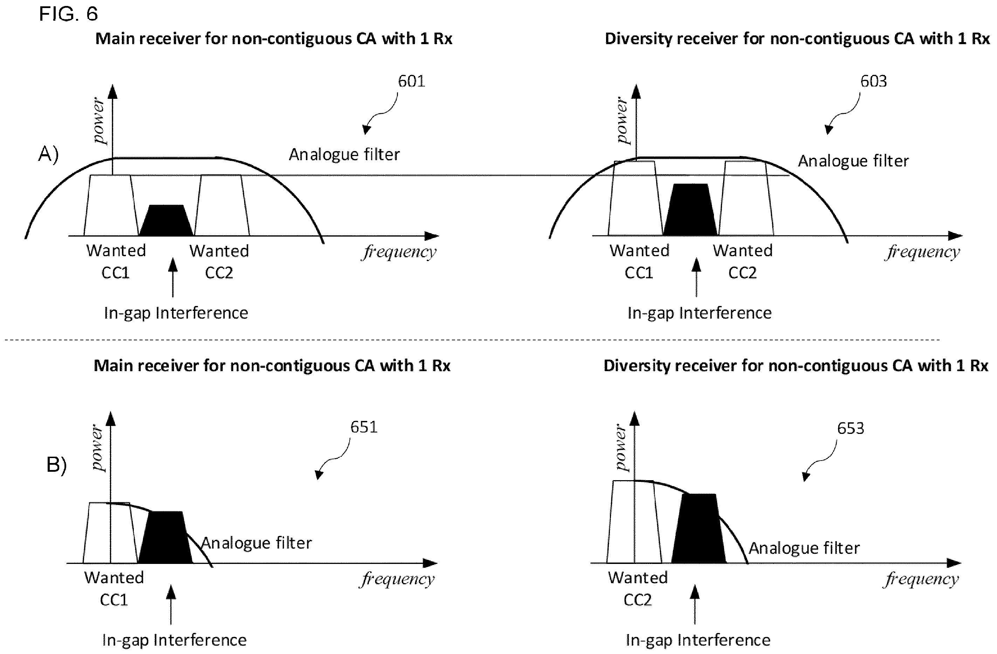

Other examples showing how a UE may utilise its HW resources for receiving CCs is depicted in FIG. 6.

FIG. 6 shows example graphical representations of non-contiguous intra-band carrier aggregation.

In FIG. 6A, a first graphical representation 601 shows that a CC1 and a CC2 are both received utilising a (single) main receiver receive chain. A second graphical representation 603 shows that the CC1 and the CC2 are also received by a (single) diversity receiver receive chain. For a UE comprising four receive chains (e.g., UE 409 of FIG. 4), then there would be two receive chains that would be available.

As depicted in FIG. 6A, when the in-gap interference is low, a single receive chain is used for the main receiver and a single receive chain is used as diversity receiver for non-contiguous, intra-band 2CA. The CCs and interferer can be of different input powers at each antenna. Both the main receiver and the diversity receiver are shown to operate with a widened analogue filter to receiver both fragmented component carriers as the in-gap interference is sufficiently low to allow this configuration to work with limited impact.

In FIG. 6B, a third graphical representation 651 shows that a CC1 is received utilising a (single) main receiver receive chain (similar to FIG. 5). A fourth graphical representation 653 shows that a CC2 is received by a (single) diversity receiver receive chain. As depicted in third graphical representation 651 and the fourth graphical representation 653, the interference between CC1 and CC2 is lower (in power) than the power of the received CC1 and CC2, since the analogue filter supports with attenuation of the in-gap interference. The interference is higher compared to the first 601 and second graphical representations 603. For a UE comprising four receive chains (e.g., UE 409 of FIG. 4), then there would be two receive chains that would be available.

As depicted in FIG. 6B, when in-gap interference is above a threshold, and the quality of a single component carriers themselves are sufficient to receive without the need for diversity gain, the configuration of FIG. 6B may be used, using 2 receive chains, 1 per CC. In FIG. 6B, the receiver usually used for diversity is used for the second component carrier, but it could be any receive chain, depending on the UE design.

In this manner, as shown in FIGS. 4 to 6, a configuration of a UE may change when receiving two (or more) CCs which may lead to HW resources becoming available at a UE. However, a network may not be aware of the available HW resources, and thus may not schedule data to be transmitted to the UE (which would utilise those available HW resources).

One or more of the following examples aim to address one or more of the problems identified above.

In examples, there is provided a method performed by a communication device (e.g., a UE), the method comprising: sending, to a network entity (e.g., a gNB), information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; performing measurements on the two component carriers to determine second measurements, wherein the communication device is operating according to the first mode; based on the first and second measurements, switching to operate according to the second mode at the communication device; and receiving, from the network entity, indication to activate a further component carrier at the communication device, so that a receive chain that has become available due to the switching to the second mode is utilised for receiving the further component carrier at the communication device.

In examples, there is provided a method performed by a communication device (e.g., a UE) comprising: sending, to a network entity (e.g., a gNB), information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode; based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device; performing measurements on the two component carriers to determine second measurements, wherein the communication device is operating according to the first mode; based on the first and second measurements, switching from operating according to the first mode to the second mode at the communication device; activating a further component carrier, so that a receive chain that has become available due to the switching to the second mode is utilised for receiving the further component carrier at the communication device; performing measurements on the two component carriers to determine third measurements; based on the third measurements, switching to operate according to the first mode at the communication device, such that the receive chain utilised for receiving the further component carrier is no longer available; and sending, to the network entity, an indication that the further component carrier has been de-activated at the communication device.

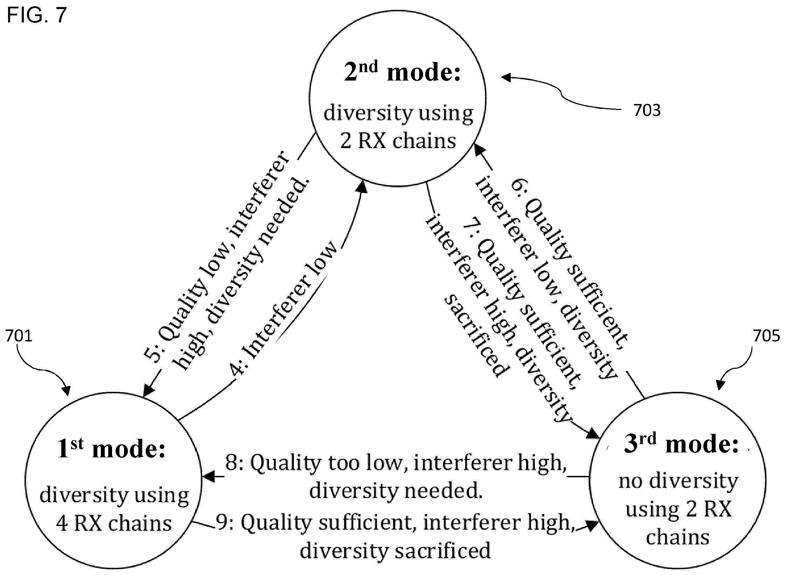

These examples will be described in more detail below, alongside FIGS. 7 to 15.

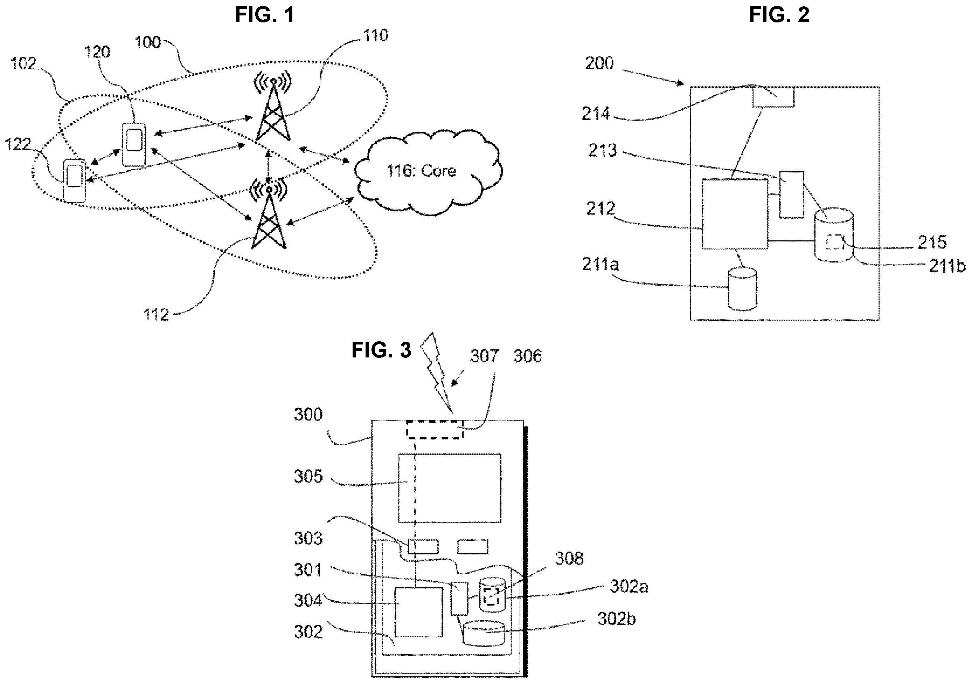

Before explaining the examples above in greater detail, an example communication device (as shown in FIG. 3) that is capable of non-contiguous, intra-band CA will be described. The communication device is part of a communication system (as shown in FIG. 1). The communication device may communicate with one or more of the entities of the communication system (as shown in FIG. 1) via an apparatus (as shown in FIG. 2), which may be part of/comprised in a base station (or gNB). As described above, a base station and communication device may communicate with each other, such that the base station is able transmit data on one or more component carriers to the communication device.

Certain general aspects of the communication system and the communication device are briefly explained with reference to FIGS. 1 to 3 to assist in understanding the technology underlying the described examples.

FIG. 1 shows a schematic representation of a 5G communication system 100. In this manner, FIG. 1 illustrates an example of a communication network to which examples disclosed herein may be applied. The communication network or a cellular communication network may comprise a network node 110 providing one or more cells, such as cell 100, and a network node 112 providing one or more other cells, such as cell 102. Each cell may be, e.g., a macro cell, a micro cell, femto, or a pico cell, for example. The cell may define a coverage area or a service area of the corresponding access node.

The network node 110 may provide a user equipment (UE) 120 (one or more UEs) with wireless access to the communication network. The wireless access may comprise downlink (DL) communication from the network node to the UE 120 and uplink (UL) communication from the UE 120 to the network node. Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for transmitting data towards the user equipment.

There may be a plurality of UEs 120, 122 in the system. Each of them may be served by the same or by different network nodes 110, 112. UE may be configured with dual connectivity (DC), wherein the UE, e.g. UE 120, may be connected to multiple network nodes 110, 112. The UEs 120, 122 may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

In the case of multiple network nodes in the communication network, the network nodes may be connected to each other via an interface. LTE specifications call such an interface as X2 interface. An interface between an LTE node and a 5G node, or between two 5G nodes may be called Xn interface.

The network nodes 110 and 112 may be further connected via another interface to a core network 116 of the communication network. The LTE specifications specify the core network as an evolved packet core (EPC), and the core network may comprise e.g. a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC). The 5G core may comprise e.g. an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example.

FIG. 2 illustrates an example of an apparatus 200. The apparatus 200 may be for the 5G communication system of FIG. 1. The apparatus 200 may be for controlling a function of one or more network entities and/or network functions, such as the entities of the 5G-RAN or the 5GC as illustrated on FIG. 1. The apparatus 200 comprises at least one random access memory (RAM) 211a, at least one read only memory (ROM) 211b, at least one processor 212, 213 and an input/output interface 214. The at least one processor 212, 213 is coupled to the RAM 211a and the ROM 211b. The at least one processor 212, 213 may be configured to execute an appropriate software code 215. The software code 215 may for example allow to perform one or more steps to perform one or more of the present aspects or examples. The software code 215 may be stored in the ROM 211b. The apparatus 200 may be interconnected with another apparatus 200 controlling another entity/function of the 5G-AN or the 5GC.. In some examples, apparatus 200 may be configured to provide one or more functions of the 5G-AN or the 5GC. For example, apparatus 200 may be configured to perform at least some functionality of a particular function of the 5G-AN or the 5GC. For example, apparatus 200 may be configured to operate as a particular function of the 5G-AN or the 5GC. In alternative examples, apparatus 200 may be configured to perform at least some functionality of two or more functions of the 5G-AN and/or the 5GC. For example, apparatus 200 may be configured to operate as two or more functions of the 5G-AN and/or the 5GC. The apparatus 200 may comprise one or more circuits, or circuitry (not shown) which may be configured to perform one or more of the present aspects or examples.

FIG. 3 illustrates an example of a communication device 300. The communication device 300 may be similar to the communication device 102 illustrated in FIG. 1. The communication device 300 may be provided by any device capable of sending and receiving radio signals. Non-limiting examples of a communication device 300 are a user equipment, a terminal, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device, or a terrestrial/maritime/aerial vehicle such as a car, a truck, a boat, an air plane, or a drone, or any combinations of these or the like. The communication device 300 may provide, for example, communication of data for carrying communications. The communications may be one or more of voice, electronic mail (email), text message, multimedia, data, machine data and so on.

The communication device 300 may receive signals over an air or radio interface 307 via appropriate apparatus for receiving and may transmit signals via appropriate apparatus for transmitting radio signals. In FIG. 3, a transceiver apparatus is designated schematically by block 306. The transceiver apparatus 306 may be provided for example by means of a radio part and associated antenna arrangement. The antenna arrangement may be arranged internally or externally to the mobile device.

The communication device 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a. The communication device 300 may comprise one or more circuits, or circuitry (not shown) which may be configured to perform one or more of the present aspects or examples.

The processor, storage and other relevant control apparatus may be provided on an appropriate circuit board and/or in chipsets. This feature is denoted by reference 304. The communication device may optionally have a user interface such as keypad 305, touch sensitive screen or pad, combinations thereof or the like. Optionally one or more of a display, a speaker and a microphone may be provided depending on the type of the device.

A UE (e.g., the communication device of FIG. 3) may be able to (autonomously) switch between modes of operation, wherein each mode of operation is associated with non-contiguous intra-band CA. Rather than a UE autonomously switching between modes, a NW may instruct the UE to switch between modes dependent on one or more factors. One or more of the modes may be associated with different HW resource usage at the UE. An example of transitioning (switching) between modes is depicted in FIG. 7.

FIG. 7 shows a schematic representation of transitions between modes of operation at a communication device. In the example of FIG. 7, there are three modes of operation associated with non-contiguous intra-band CA at a communication device (e.g., UE). In other examples, there may be more, or fewer than three modes. In the following examples, the term 'mode' is used. It should be understood that any other suitable term may be used, such as 'state', 'configuration', etc. These terms may be used interchangeably.

In a first mode 701, the UE utilises four Rx chains to receive two CCs for non-contiguous intra-band CA. The first mode 701 utilises both main receiver Rx chains of the UE, and both diversity Rx chains of the UE. The first mode 701 may be associated with the reception performed by the UE 409 in FIG. 4. In a second mode 703, the UE utilises two Rx chains to receive two CCs for non-contiguous intra-band CA. In the second mode 703, diversity is maintained such that a single Rx chain of the main receiver and a single Rx chain of the diversity receiver is utilised. The second mode 703 may be associated with the reception performed by the UE 409 in FIG.5. In a third mode 705, the UE utilises two Rx chains to receive two CCs for non-contiguous intra-band CA. In the third mode 705, the UE will not have any diversity gain such that the two Rx chains of the main and the diversity receiver(s) are used to receive one or more of the two CCs. The third mode 705 is shown in FIG. 6B, whereby an analogue filter is placed relative to the down-conversion frequency at CC1 for the main receiver and at CC2 for the diversity receiver, each applying a narrower analogue filter, which allows attenuation of the in-gap interference.

In this manner, the second 703 and third modes 705 of the UE utilise fewer Rx chains of the UE to receive two CCs, compared to the first mode 701.

When the UE is operating according to the first mode 701, when the frequency bandwidth between the two CCs is sufficiently low (e.g., below a threshold), then the UE may switch (shown with label '4') to the second mode 703.

When the UE is operating according to the second mode 703, when the quality of the CCs is low, the interference is high, and diversity is needed, then the UE may switch (shown with label '5') to the first mode 701.

When the UE is operating according to the third mode 705, when the quality of the CCs is sufficient, the interference is low, and diversity improves the reception, then the UE may switch (as shown with label '6') to the second mode 703.

When the UE is operating according to the second mode 703, when the quality of the CCs is sufficient, the interference is high, and the need to suppress the in-gap interferer is larger than the advantage of the diversity gain (diversity gain sacrificed), then the UE may switch (as shown with label '7') to the third mode 705.

When the UE is operating according to the third mode 705, when the quality of the CCs is too low, the interference is high, and diversity is needed, then the UE may switch (as shown with label '8') to the first mode 701.

When the UE is operating according to the first mode 701, when the quality of the CCs is sufficient, the interference is high, and diversity may be sacrificed, then the UE may switch (shown with label '9') to the third mode 705.

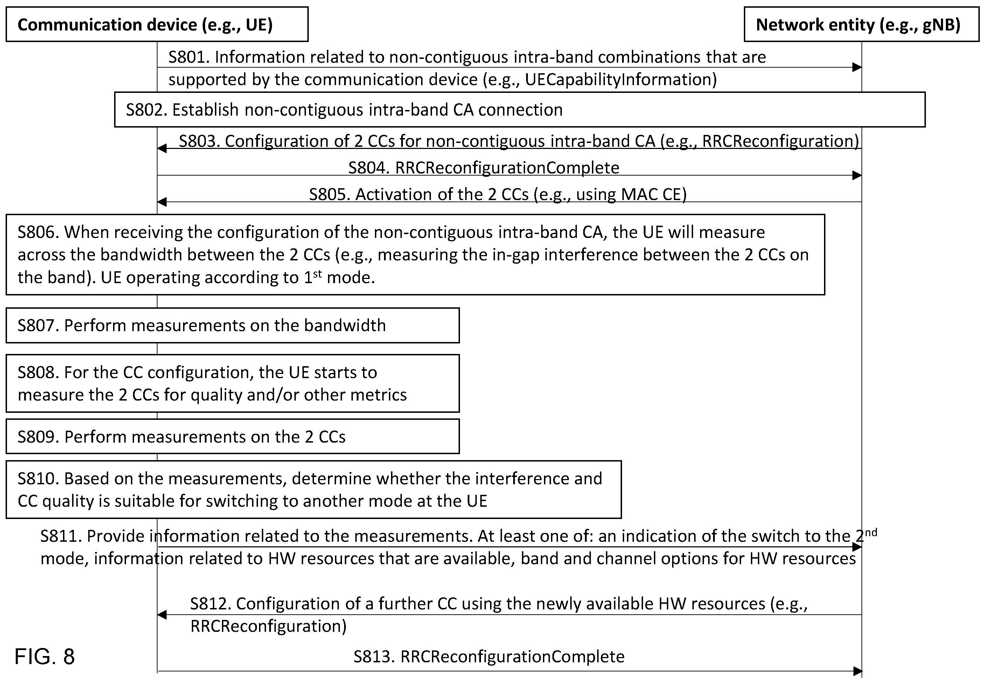

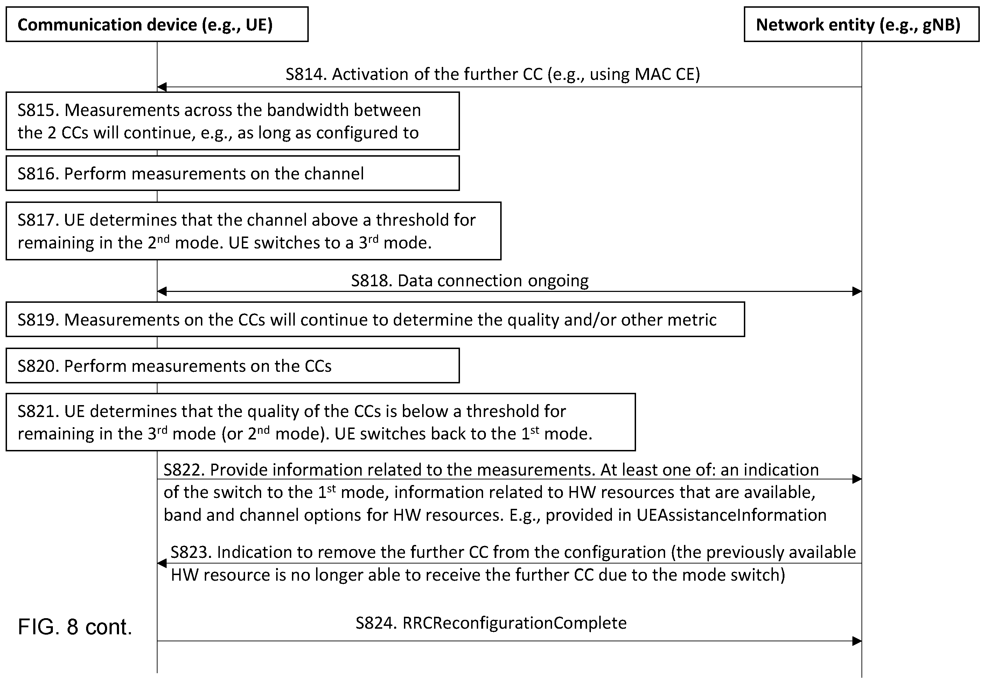

Each of the mode switches described above may be UE-initiated or NW-initiated. Different examples of signalling and operations related to the switching between modes for non-contiguous intra-band CA are shown in FIGS. 8 to 11 below.

In the second 703 and third modes 705, the UE will have additional HW resources available (temporarily) as long as the conditions for in-gap interference and diversity are maintained as described above. This allows the UE to use the free RX chains for other purposes, such as for example, receiving additional CCs, additional measurements, or higher order inter-band combinations. However, the available HW resources are not known at the NW side.

In some examples, the UE informs the NW about the capability of supporting the second mode and/or the third mode (assuming that the first mode is the default configuration for the UE) and informs the NW when the UE is using either the second or third mode. The NW then assumes the extended capabilities are according to the UE only using resources comparable to 1 CC in the used band (1 RX chain operation). The network then uses RRC signaling for reconfiguration.

In some examples, the UE informs the NW about potential temporary extensions of resources when using the second mode and/or third mode and the capabilities of the additional resources. The NW then configures extended resources for the UE (e.g., in order to receive further CCs). The NW then activates/de-activates the extra configured resource based on indication of mode from the UE. The NW may select between higher order band combinations supported by the UE without the indication of non-contiguous CA. This allows the NW to determine the inter-band combinations that the UE potentially may combine, when the UE signals 1 RX branch in-use for fragmented CA reception.

In some examples, the UE is allowed to at least de-activate additional activated resources when shifting to the first mode by itself. The UE sends an indication to the NW related to the de-activation instead of indicating the need to de-activate via RRC and waiting for the de-activation command from the NW. In some examples, the UE is allowed to activate additional resources that have been configured for the UE (e.g., a configured further CC). The UE activates the additional resource(s), and then provides an indication/notification to the NW about the activation.

These examples are described in detail alongside FIGS. 8 to 11 below.

FIG. 8 shows an example signalling and operations diagram between a communication device and a network entity for non-contiguous intra-band carrier aggregation. In this example, the communication device is a UE, and the network entity is a gNB. In other examples, the communication device and network entity may be other suitable devices/entities.

At S801, the UE provides information related to non-contiguous intra-band combinations that are supported by the UE. The information may be provided in 'UECapabilitylnformation'.

The information may indicate at least one mode (also referred to as a 'state') that is supported by the UE. In this example, the information indicates a first mode and a second mode of the UE. The UE is configured to utilise fewer receive chains (also referred to as receive branches) when receiving CCs for non-contiguous intra-band CA in the second mode compared to the first mode. For example, in the first mode, in order to receive two CCs for non-contiguous intra-band CA the UE utilises four receive chains (e.g., as depicted in FIG. 4). In the second mode, in order to receive two CCs for non-contiguous intra-band CA the UE utilises two receive chains (e.g., as depicted in FIG. 5).

The information may indicate a third mode that is supported by the UE. The third mode may utilise the same number of receive chains as the second mode when receiving two CCs for non-contiguous intra-band CA. The third mode may utilise different receive chains in the UE compared to the second mode. For example, in the third mode, the receive chains associated with the diversity receiver are placed at a different CC to that of the main receiver. In this manner, the same number of receive chains are utilised, but the local oscillators (LO) are placed apart between the main receiver and the receive with the 'traditional' purpose to serve for diversity gain. This sacrifices diversity (less sensitivity), but tolerates larger levels of the in-gap interference (in the third mode).

Following S801, the UE and the gNB (i.e., the NW) have a shared view of UE capabilities. The UE gives the extended capabilities in case of non-contiguous intra-band combinations, and for which bands this is supported. In this example, the UE supports the first, second and third modes, but there may be examples as well where the UE does support the first mode and the second mode, but not the third mode.

At S802, the UE and the gNB establish a non-contiguous intra-band CA connection.

At S803, the gNB sends (or provides), to the UE, a configuration of two CCs for non-contiguous intra-band CA. The configuration may be sent using an 'RRCReconfiguration' message.

At S804, the UE sends, to the gNB, an acknowledgement of the configuration. The acknowledgment may be sent using an 'RRCReconfigurationComplete' message.

At S805, the gNB sends, to the UE, an indication to activate the two CCs (that were previously configured. The indication may be provided in a MAC CE.

The NW activates the two CCs in the non-contiguous intra-band. This mode (or state) of the UE may depend on previous measurements on the two CCs before the activation happens. The activation may also be performed at a later stage, after a suitable amount of measurements have been performed by the UE which would allow the UE to enter the second mode or the third mode for the 2 CCs instead of entering the 'traditional' first mode.

Once the two CCs have been activated, in this example, the UE is operating according to the first mode. Stated differently, four receive chains of the UE are being utilised to receive the two CCs.

At S806, when the configuration of the two CCs has been received, the UE will measure across the bandwidth between the two CCs. The bandwidth between the two CCs includes unwanted frequencies for the UE. Due to this, the bandwidth may be referred to as an 'frequency block' or simply a 'in-gap interference', or an 'in-gap interferer'.

The measurements to be performed may be network controlled. In other examples, the measurements are established by the UE itself. When configured by the network, the UE may retrieve information on a synchronization signal block (SSB), etc. In other examples, a 'blind' measurement (i.e., a UE-controlled measurement) may comprise determining a power average over a selected bandwidth.

Normally, a UE does not measure a bandwidth that does not belong to the same network or an equivalent network. However, in this instance, the UE is to measure the in-gap interference (i.e., measure the frequency block) between the 2 non-contiguous, intra-band CCs to evaluate the possibilities of modes (i.e., whether the second or third modes are possible). If the in-gap interference is too high, then the second mode may not be suitable as that risks oversteering the analogue to digital converted (ADC) of the UE. This would thereby bring the wanted signal below the noise floor of the receiver because there is no analog filter to attenuate the in-gap interference as there is in the first mode. The lack of attenuation will make the interference dominate the gain control of the receiver. As the gain is lowered (more attenuation) the noise floor increases and eventually comes to the same level as the wanted signals, making reception difficult.

At S807, the UE performs the measurements across the bandwidth between the 2 CCs to determine measurements (herein referred to as 'first measurements'). The UE may perform any suitable measurements, such as for example, peak and average power. Peak and average power measurements would also allow the UE to determine signal-to-interference ratio.

At S808, the UE begins to perform measurements on the two CCs. For example, the measurements may be performed to determine the quality of the CC configuration.

At S809, the UE performs the measurements on the two CCs to determine measurements (herein referred to as 'second measurements'). For example, the second measurements may comprise: carrier quality, and/or signal quality.

At S810, based on (or using, or utilising) at least one of the first measurements and the second measurements, the UE determines whether to switch to one of the other modes of operation (i.e., whether to switch to the second mode or the third mode). An example of switching between the modes is depicted in FIG. 7.

In some examples, the UE compares the first measurement to a first threshold. In some examples, the UE compared the second measurement to a second threshold. The determination of whether to switch modes may be based on the comparisons to the first and second thresholds.

In this example, based on the first and second measurements, the UE determines that it would be suitable to switch to the second mode. The UE has determined that the measured quality of the two CCs is sufficient for a reduced (HW) resource configuration at the UE, and has determined that interference associated with the in-gap interference is low enough to allow a switch to the second mode. Stated differently, the UE evaluates the non-contiguous, intra-band CCs and the in-gap interference between them. As both are within thresholds to allow for the second mode, the UE decides to change mode to the second mode.

At S811, the UE sends, to the gNB, information related to the first measurements and the second measurements. The information may comprise at least one of: an indication of the switch to the second mode, information related to available HW resources at the UE (e.g., available RX chains at the UE), or information related to band and channel options for HW resources to be added. The information related to band and channel options may be related to the uses of the HW resources that are now free. The HW resources may be applicable to specific band combinations, or a set of band combinations. Stated differently, the HW resources may be applied to any new band combination, in some examples. The information related to the first measurements and the second measurements may be comprised in UEAssistancelnformation.

At S812, the gNB sends, to the UE, a configuration for a further (or additional) CC. The further CC is to utilise the one or more receive chains of the UE that are not available following the mode switch to the second mode. In some examples, the gNB reconfigures the UE to update the previously provided configuration (e.g., in S803). In some examples, the gNB reconfigures the UE with one or more further CCs (e.g., dependent on the number of receive chains that are now free). S812 may be an RRCReconfiguration message from the gNB, in some examples.

At S813, the UE acknowledges the configuration for the further CC. The UE may provide an RRCReconfigurationComplete message to the gNB to make the acknowledgement.

At S814, the gNB sends, to the UE, an indication to activate the further CC (or activate the configuration associated with the further CC). In some examples, the gNB sends a MAC CE comprising the indication to activate the further CC.

At S815, the UE continues to measure across the bandwidth between the two CCs. These measurements may continue as long as the UE is configured to do so.

At S816, the UE performs the measurements across the bandwidth between the 2 CCs to determine measurements (herein referred to as 'third measurements'). The third measurements are performed in addition to the first measurements. The first and third measurements are both related to the measuring of the in-gap interference.

At S817, based on the third measurements, the UE determines to switch to the third mode. For example, the UE may compare the third measurements to a third threshold. Based on the third measurements, the UE may determine that the interference is above the third threshold for remaining in the second mode, and therefore determines to switch to the third mode.

The UE switches to the third mode. This does not result in a reconfiguration by the network.

At S818, the data connection is ongoing between the UE and the gNB.

At S819, the UE continues to perform measurements on the two CCs.

At S820, the UE performs the measurements on the two CCs to determine measurements (herein referred to as 'fourth measurements').

At S821, based on at least one of the third measurements and the fourth measurements, the UE determines whether to switch modes. In this example, based on at least the fourth measurements, the UE determines that it is suitable to switch back to the first mode. For example, the UE may compare the fourth measurements to a fourth threshold. Based on the comparing, the UE determines that the quality of the two CCs is not sufficient for staying in the third mode (or switching to the second mode). The UE therefore switches to the first mode.

At S822, the UE sends, to the gNB, information related to the switching of the mode.

The information may comprise: information related to at least one of: the third measurements or the fourth measurements. The information may comprise at least one of: an indication of the switch to the first mode at the UE, information related to available HW resources (or no-longer available) at the UE (e.g., available RX chains at the UE), or information related to band and channel options for HW resources to be removed. The information may be comprised in UEAssistancelnformation.

At S823, the gNB sends, to the UE, an indication to de-activate (or remove) the further CC. The gNB may perform a reconfiguration of the UE to de-activate (or remove) the further CC. The further CC can no longer be received by the UE as the receive chains of the UE (that were previously being used to receive the further CC) are no longer available due to the mode switch. The indication may be comprised in an RRCReconfiguration message.

At S824, the UE sends, to the gNB, an acknowledgment of the reconfiguration. The acknowledgement be comprised in (or in the form of) an RRCReconfigurationComplete message.

It should be understood that, in other examples, one or more of the steps of FIG. 8 may not be performed, or may be performed in a different order.

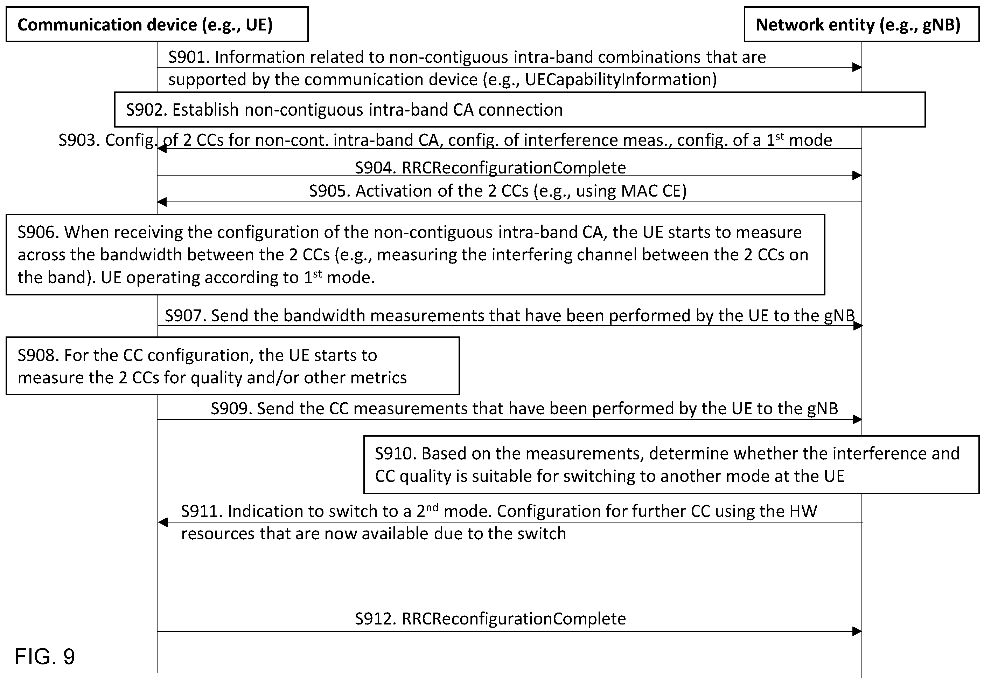

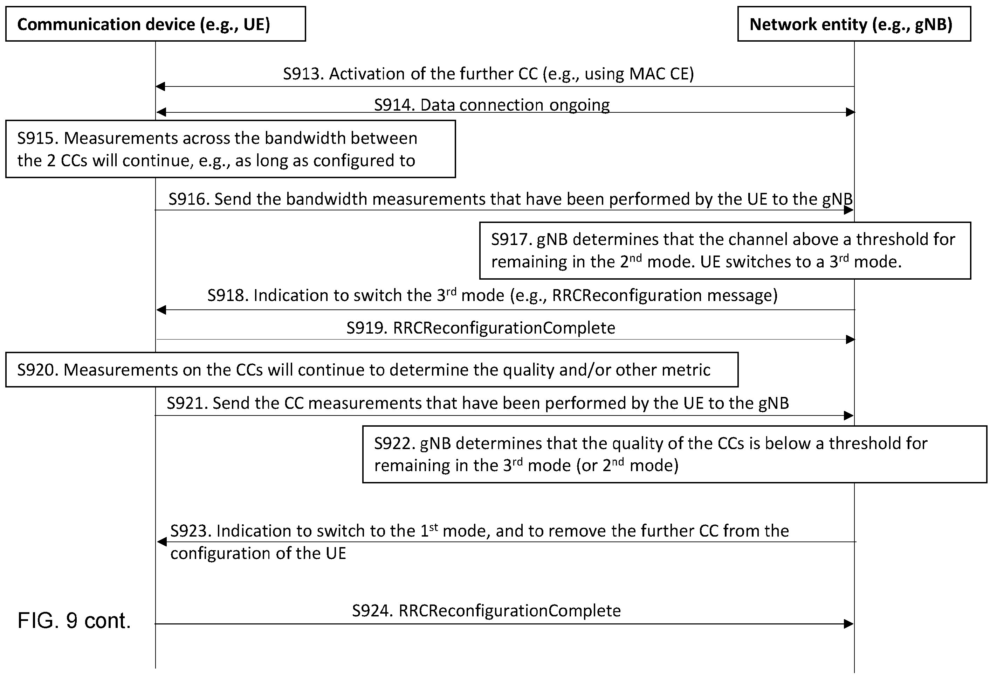

FIG. 9 shows an example signalling and operations diagram between a communication device and a network entity for non-contiguous intra-band carrier aggregation. In this example, the communication device is a UE, and the network entity is a gNB. In other examples, the communication device and network entity may be other suitable devices/entities.

At S901, the UE provides information related to non-contiguous intra-band combinations that are supported by the UE. The information may be provided in 'UECapabilitylnformation'.

The information may indicate at least one mode (also referred to as a 'state') that is supported by the UE. In this example, the information indicates a first mode and a second mode of the UE. The UE is configured to utilise fewer receive chains (also referred to as receive branches) when receiving CCs for non-contiguous intra-band CA in the second mode compared to the first mode. For example, in the first mode, in order to receive two CCs for non-contiguous intra-band CA the UE utilises four receive chains (e.g., as depicted in FIG. 4). In the second mode, in order to receive two CCs for non-contiguous intra-band CA the UE utilises two receive chains (e.g., as depicted in FIG. 5).

The information may indicate a third mode that is supported by the UE. The third mode may utilise the same number of receive chains as the second mode when receiving two CCs for non-contiguous intra-band CA. The third mode may utilise different receive chains in the UE compared to the second mode. For example, in the third mode, the receive chains associated with the diversity receiver are placed at a different CC to that of the main receiver. In this manner, the same number of receive chains are utilised, but the local oscillators (LO) are placed apart between the main receiver and the receive with the 'traditional' purpose to serve for diversity gain. This sacrifices diversity (less sensitivity), but tolerates larger levels of the in-gap interference (in the third mode).

Following S901, the UE and the gNB (i.e., the NW) have a shared view of UE capabilities. The UE gives the extended capabilities in case of non-contiguous intra-band combinations, and for which bands this is supported. In this example, the UE supports the first, second and third modes, but there may be examples as well where the UE does support the first mode and the second mode, but not the third mode.

At S902, the UE and the gNB establish a non-contiguous intra-band CA connection.

At S903, the gNB sends (or provides), to the UE, a configuration of two CCs for non-contiguous intra-band CA. The gNB may also send a setup (or configuration) for measuring across a bandwidth between the two CCs. The gNB may also send a configuration for the UE for the first mode. The configuration may be sent using an 'RRCReconfiguration' message.

At S904, the UE sends, to the gNB, an acknowledgement of the configuration. The acknowledgment may be sent using an 'RRCReconfigurationComplete' message.

At S905, the gNB sends, to the UE, an indication to activate the two CCs (that were previously configured. The indication may be provided in a MAC CE.

The NW activates the two CCs in the non-contiguous intra-band. This mode (or state) of the UE may depend on previous measurements on the two CCs before the activation happens. The activation may also be performed at a later stage, after a suitable amount of measurements have been performed by the UE which would allow the UE to enter the second mode or the third mode for the 2 CCs instead of entering the 'traditional' first mode.

Once the two CCs have been activated, in this example, the UE is operating according to the first mode. Stated differently, four receive chains of the UE are being utilised to receive the two CCs.

At S906, when the configuration of the two CCs has been received, the UE will measure across the bandwidth between the two CCs. The bandwidth between the two CCs includes unwanted frequencies for the UE.

The measurements to be performed may be network controlled. In other examples, the measurements are established by the UE itself. When configured by the network, the UE may retrieve information on a synchronization signal block (SSB), etc. In other examples, a 'blind' measurement (i.e., a UE-controlled measurement) may comprise determining a power average over a selected bandwidth.

Normally, a UE does not measure a bandwidth that does not belong to the same network or an equivalent network. However, in this instance, the UE is to measure the in-gap interference (i.e., measure the frequency block) between the 2 non-contiguous, intra-band CCs to evaluate the possibilities of modes (i.e., whether the second or third modes are possible). If the in-gap interference is too high, then the second mode may not be suitable as that risks oversteering the analogue to digital converted (ADC) of the UE. This would thereby bring the wanted signal below the noise floor of the receiver because there is no analog filter to attenuate the in-gap interference as there is in the first mode. The lack of attenuation will make the interference dominate the gain control of the receiver. As the gain is lowered (more attenuation) the noise floor increases and eventually comes to the same level as the wanted signals, making reception difficult.

At S907, the UE performs the measurements across the bandwidth between the 2 CCs to determine measurements (herein referred to as 'first measurements'). The UE may perform any suitable measurements, such as for example, peak and average power. Peak and average power measurements would also allow the UE to determine signal-to-interference ratio. The UE sends, to the gNB, information related to the first measurements.

At S908, the UE begins to perform measurements on the two CCs. For example, the measurements may be performed to determine the quality of the CC configuration.

At S909, the UE performs the measurements on the two CCs to determine measurements (herein referred to as 'second measurements'). For example, the second measurements may comprise: carrier quality, and/or signal quality. The UE sends, to the gNB, information related to the second measurements.

At S910, based on (or using, or utilising) at least one of the first measurements and the second measurements, the gNB determines whether to switch the UE to one of the other modes of operation (i.e., whether to switch to the second mode or the third mode). An example of switching between the modes is depicted in FIG. 7.

In some examples, the gNB compares the first measurement to a first threshold. In some examples, the gNB compared the second measurement to a second threshold. The determination of whether to switch modes may be based on the comparisons to the first and second thresholds.

In this example, based on the first and second measurements, the gNB determines that it would be suitable to switch to the second mode. The gNB has determined that the measured quality of the two CCs is sufficient for a reduced (HW) resource configuration at the UE, and has determined that interference associated with the interference channel is low enough to allow a switch to the second mode. Stated differently, the gNB evaluates the non-contiguous, intra-band CCs and the interferer channel between them. As both are within thresholds to allow for the second mode, the gNB decides to change mode to the second mode.

At S911, the gNB sends, to the UE, an indication to switch to the second mode at the UE. The gNB also sends, to the UE, a configuration for a further (or additional) CC. The further CC is to utilise the one or more receive chains of the UE that are not available following the mode switch to the second mode. In some examples, the gNB reconfigures the UE to update the previously provided configuration (e.g., in S903). In some examples, the gNB reconfigures the UE with a plurality of further CCs (e.g., two further CC for the two receive chains that are now free). The indications may be included in an RRCReconfiguration message from the gNB, in some examples.

At S912, the UE acknowledges the configuration for the further CC. The UE may provide an RRCReconfigurationComplete message to the gNB to make the acknowledgement.

At S913, the gNB sends, to the UE, an indication to activate the further CC (or activate the configuration associated with the further CC). In some examples, the gNB sends a MAC CE comprising the indication to activate the further CC.

At S914, the data connection is ongoing between the UE and the gNB.

At S915, the UE continues to measure across the bandwidth between the two CCs. These measurements may continue as long as the UE is configured to do so, when the measurements are network-controlled. In other examples, the UE may control when to start/stop the measurements across the bandwidth.

At S916, the UE performs the measurements across the bandwidth between the 2 CCs to determine measurements (herein referred to as 'third measurements'). The third measurements are performed in addition to the first measurements. The first and third measurements are both related to the measuring of the in-gap interference.

The UE sends, to the gNB, information related to the third measurements.

At S917, based on the third measurements, the gNB determines to switch the UE to the third mode. For example, the gNB may compare the third measurements to a third threshold. Based on the third measurements, the gNB may determine that the interference is above the third threshold for remaining in the second mode, and therefore determines to switch the UE to the third mode.

As the UE is to switch to the second mode, this will result in a reconfiguration by the network.

At S918, the gNB sends, to the UE, an indication to switch to the second mode. The gNB may reconfigure the UE (e.g., with a RRCReconfiguration message) to switch to operate according to the second mode.

At S919, the UE sends, to the gNB, an acknowledgment of the reconfiguration. The acknowledgement be comprised in (or in the form of) an RRCReconfigurationComplete message.

At S920, the UE continues to perform measurements on the two CCs.

At S921, the UE performs the measurements on the two CCs to determine measurements (herein referred to as 'fourth measurements'). UE sends, to the gNB, the fourth measurements.

At S922, based on at least one of the third measurements and the fourth measurements, the gNB determines whether to switch modes. In this example, based on at least the fourth measurements, the gNB determines that it is suitable to switch back to the first mode. For example, the gNB may compare the fourth measurements to a fourth threshold. Based on the comparing, the gNB determines that the quality of the two CCs is not sufficient for staying in the third mode (or switching to the second mode).

At S923, the gNB sends, to the UE, and indication to switch to the first mode, and an indication to de-activate (or remove) the further CC. The gNB may perform a reconfiguration of the UE to de-activate (or remove) the further CC. The further CC can no longer be received by the UE as the receive chains of the UE (that were previously being used to receive the further CC) are no longer available due to the mode switch. The indication may be comprised in an RRCReconfiguration message.

At S924, the UE sends, to the gNB, an acknowledgment of the reconfiguration. The acknowledgement be comprised in (or in the form of) an RRCReconfigurationComplete message.

It should be understood that, in other examples, one or more of the steps of FIG. 9 may not be performed, or may be performed in a different order.

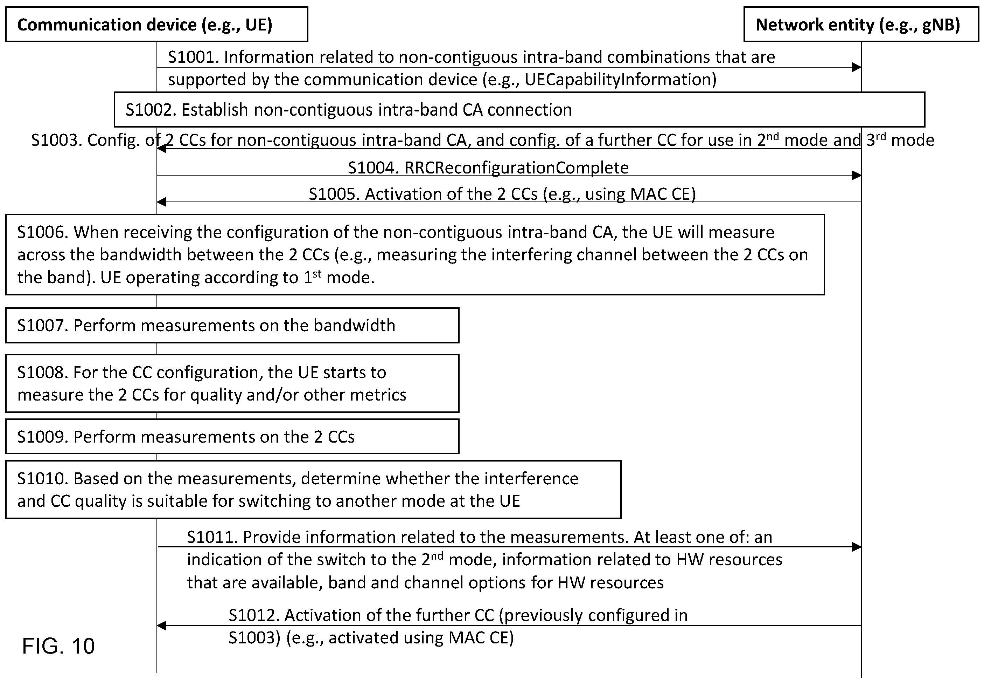

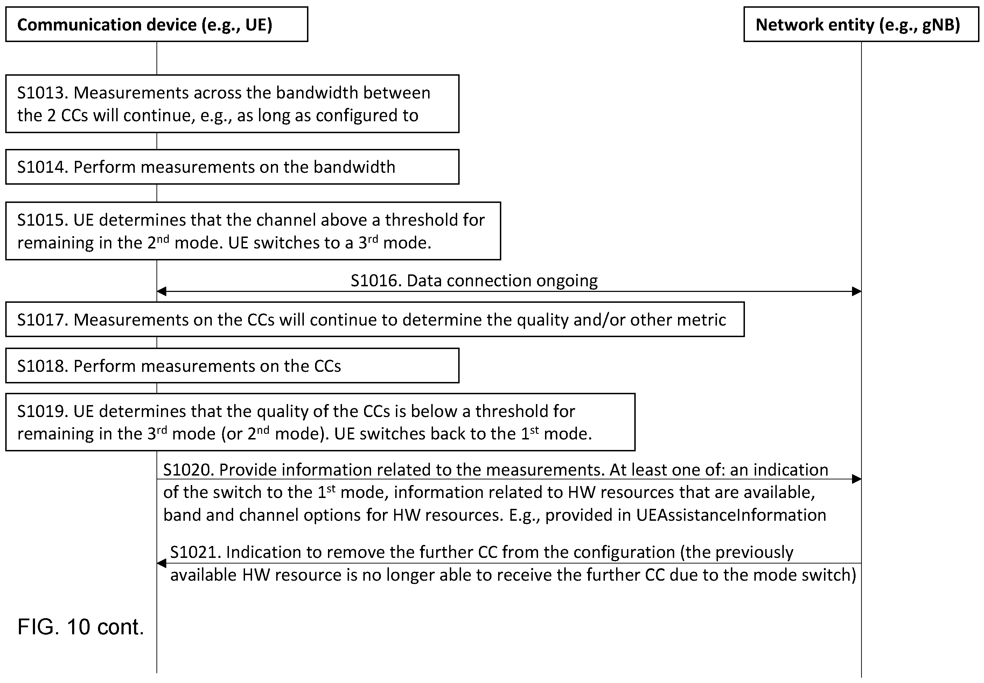

FIG. 10 shows an example signalling and operations diagram between a communication device and a network entity for non-contiguous intra-band carrier aggregation. In this example, the communication device is a UE, and the network entity is a gNB. In other examples, the communication device and network entity may be other suitable devices/entities.

At S1001, the UE provides information related to non-contiguous intra-band combinations that are supported by the UE. The information may be provided in 'UECapabilitylnformation'.

The information may indicate at least one mode (also referred to as a 'state') that is supported by the UE. In this example, the information indicates a first mode and a second mode of the UE. The UE is configured to utilise fewer receive chains (also referred to as receive branches) when receiving CCs for non-contiguous intra-band CA in the second mode compared to the first mode. For example, in the first mode, in order to receive two CCs for non-contiguous intra-band CA the UE utilises four receive chains (e.g., as depicted in FIG. 4). In the second mode, in order to receive two CCs for non-contiguous intra-band CA the UE utilises two receive chains (e.g., as depicted in FIG. 5).

The information may indicate a third mode that is supported by the UE. The third mode may utilise the same number of receive chains as the second mode when receiving two CCs for non-contiguous intra-band CA. The third mode may utilise different receive chains in the UE compared to the second mode. For example, in the third mode, the receive chains associated with the diversity receiver are placed at a different CC to that of the main receiver. In this manner, the same number of receive chains are utilised, but the local oscillators (LO) are placed apart between the main receiver and the receive with the 'traditional' purpose to serve for diversity gain. This sacrifices diversity (less sensitivity), but tolerates larger levels of the in-gap interference (in the third mode).

Following S1001, the UE and the gNB (i.e., the NW) have a shared view of UE capabilities. The UE gives the extended capabilities in case of non-contiguous intra-band combinations, and for which bands this is supported. In this example, the UE supports the first, second and third modes, but there may be examples as well where the UE does support the first mode and the second mode, but not the third mode.

At S1002, the UE and the gNB establish a non-contiguous intra-band CA connection.

At S1003, the gNB sends (or provides), to the UE, a configuration of two CCs for non-contiguous intra-band CA. The gNB sends, to the UE, a configuration for the second mode. The gNB sends, to the UE, a configuration for the third mode.

The configuration for the second mode has an associated (at least one) further CC that may be received by the UE. The configuration for the third mode has an associated (at least one) further CC that may be received by the UE. The further CC associated with the second and third mode is able to be received by the UE due to the freed up HW resources (i.e., receive chain(s)) from entering the second or third mode.

The configuration(s) may be sent using an 'RRCReconfiguration' message.

At S1004, the UE sends, to the gNB, an acknowledgement of the configuration. The acknowledgment may be sent using an 'RRCReconfigurationComplete' message.

At S1005, the gNB sends, to the UE, an indication to activate the two CCs (that were previously configured. The indication may be provided in a MAC CE.

The NW activates the two CCs in the non-contiguous intra-band. This mode (or state) of the UE may depend on previous measurements on the two CCs before the activation happens. The activation may also be performed at a later stage, after a suitable amount of measurements have been performed by the UE which would allow the UE to enter the second mode or the third mode for the 2 CCs instead of entering the 'traditional' first mode.

Once the two CCs have been activated, in this example, the UE is operating according to the first mode. Stated differently, four receive chains of the UE are being utilised to receive the two CCs.

At S1006, when the configuration of the two CCs has been received, the UE will measure across the bandwidth between the two CCs. The bandwidth between the two CCs includes unwanted frequencies for the UE.

The measurements to be performed may be network controlled. In other examples, the measurements are established by the UE itself. When configured by the network, the UE may retrieve information on a synchronization signal block (SSB), etc. In other examples, a 'blind' measurement (i.e., a UE-controlled measurement) may comprise determining a power average over a selected bandwidth.

Normally, a UE does not measure a bandwidth that does not belong to the same network or an equivalent network. However, in this instance, the UE is to measure the in-gap interference (i.e., measure the frequency block) between the 2 non-contiguous, intra-band CCs to evaluate the possibilities of modes (i.e., whether the second or third modes are possible). If the in-gap interference is too high, then the second mode may not be suitable as that risks oversteering the analogue to digital converted (ADC) of the UE. This would thereby bring the wanted signal below the noise floor of the receiver because there is no analog filter to attenuate the in-gap interference as there is in the first mode. The lack of attenuation will make the interference dominate the gain control of the receiver. As the gain is lowered (more attenuation) the noise floor increases and eventually comes to the same level as the wanted signals, making reception difficult.

At S1007, the UE performs the measurements across the bandwidth between the 2 CCs to determine measurements (herein referred to as 'first measurements'). The UE may perform any suitable measurements, such as for example, peak and average power. Peak and average power measurements would also allow the UE to determine signal-to-interference ratio.

At S1008, the UE begins to perform measurements on the two CCs. For example, the second measurements may comprise: carrier quality, and/or signal quality. In other examples, the second measurements may be performed to determine the quality of the CC configuration.

At S1009, the UE performs the measurements on the two CCs to determine measurements (herein referred to as 'second measurements').

At S1010, based on (or using, or utilising) at least one of the first measurements and the second measurements, the UE determines whether to switch to one of the other modes of operation (i.e., whether to switch to the second mode or the third mode). An example of switching between the modes is depicted in FIG. 7.

In some examples, the UE compares the first measurement to a first threshold. In some examples, the UE compared the second measurement to a second threshold. The determination of whether to switch modes may be based on the comparisons to the first and second thresholds.

In this example, based on the first and second measurements, the UE determines that it would be suitable to switch to the second mode. The UE has determined that the measured quality of the two CCs is sufficient for a reduced (HW) resource configuration at the UE, and has determined that interference associated with the interference channel is low enough to allow a switch to the second mode. Stated differently, the UE evaluates the non-contiguous, intra-band CCs and the interferer channel between them. As both are within thresholds to allow for the second mode, the UE decides to change mode to the second mode.

At S1011, the UE sends, to the gNB, information related to the first measurements and the second measurements. The information may comprise at least one of: an indication of the switch to the second mode, information related to available HW resources at the UE (e.g., available RX chains at the UE), or information related to band and channel options for HW resources to be added. The information may be comprised in UEAssistancelnformation.

At S1012, the gNB sends, to the UE, an indication to activate the further CC (or activate the configuration associated with the further CC). In some examples, the gNB sends a MAC CE comprising the indication to activate the further CC.

At S1013, measuring across the bandwidth between the two CCs will continue. These measurements may continue as long as the UE is configured to do so, when the measurements are network-controlled.

At S1014, the UE performs the measurements across the bandwidth between the 2 CCs to determine measurements (herein referred to as 'third measurements'). The third measurements are performed in addition to the first measurements. The first and third measurements are both related to the measuring of the in-gap interference.

At S1015, based on the third measurements, the UE determines to switch to the third mode. For example, the UE may compare the third measurements to a third threshold. Based on the third measurements, the UE may determine that the interference is above the third threshold for remaining in the second mode, and therefore determines to switch to the third mode.

The UE switches to the third mode. This does not result in a reconfiguration by the network.

At S1016, the data connection is ongoing between the UE and the gNB.

At S1017, measurements on the two CCs will be continued.

At S1018, the UE performs the measurements on the two CCs to determine measurements (herein referred to as 'fourth measurements').

At S1019, based on at least one of the third measurements and the fourth measurements, the UE determines whether to switch modes. In this example, based on at least the fourth measurements, the UE determines that it is suitable to switch back to the first mode. For example, the UE may compare the fourth measurements to a fourth threshold. Based on the comparing, the UE determines that the quality of the two CCs is not sufficient for staying in the third mode (or switching to the second mode). The UE therefore switches to the first mode.

At S1020, the UE sends, to the gNB, information related to the switching of the mode.

The information may comprise: information related to at least one of: the third measurements or the fourth measurements. The information may comprise at least one of: an indication of the switch to the first mode at the UE, information related to available HW resources (or no-longer available) at the UE (e.g., available RX chains at the UE), or information related to band and channel options for HW resources to be removed. The information may be comprised in UEAssistancelnformation.

At S1021, the gNB sends, to the UE, an indication to de-activate (or remove) the further CC. The further CC may no longer be received by the UE as the receive chains of the UE (that were previously being used to receive the further CC) are no longer available due to the mode switch. The indication may be comprised in an MAC CE.

It should be understood that, in other examples, one or more of the steps of FIG. 10 may not be performed, or may be performed in a different order.

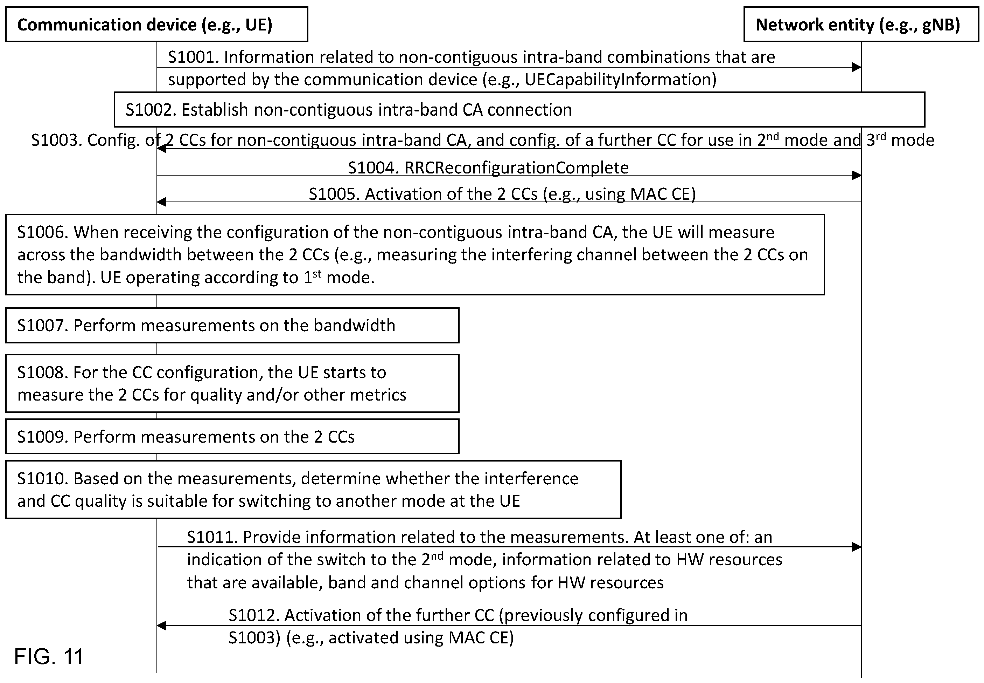

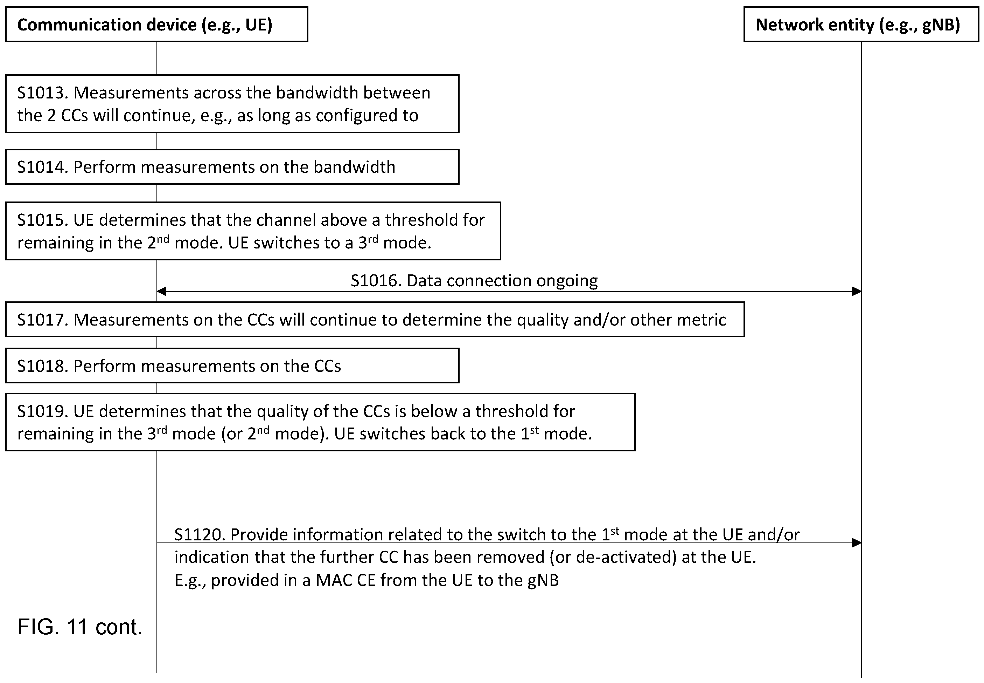

In some examples, rather than the gNB, the UE is able to de-activate the further CC when switching back to the first mode. This is depicted in FIG. 11.

FIG. 11 shows an example signalling and operations diagram between a communication device and a network entity for non-contiguous intra-band carrier aggregation. In this example, the communication device is a UE, and the network entity is a gNB. In other examples, the communication device and network entity may be other suitable devices/entities.

Common labelling is used between FIG. 10 and FIG. 11 for steps that are common to both figures.

In FIG. 11, there are S1001 to S1019, as described above for FIG. 10.

At S1120, as the UE has moved to the first mode, the UE de-activates the further CC (as the UE no longer has the HW capability to receive the further CC). The UE sends, to the gNB, information related to the mode switch (or the de-activation of the further CC). For example, the UE sends, to the UE, an indication that the further CC has been de-activated at the UE. The UE may also send an indication that the UE has switched to operate according to the first mode.

In some examples, the indication that the UE has switched to the first mode is an implicit indication that the further CC has been de-activated. Alternatively, the indication that the further CC has been de-activated is an implicit indication that the UE is operating according to the first mode.

The information / indication(s) may be sent in a MAC CE.

In the example of FIG. 11, the further CC is activated at the UE following an indication to activate being received from the gNB (i.e., S1012). In other examples, the UE is able to activate the further CC (by itself). In such a scenario, the UE activates the (configured) further CC when the UE determines it is suitable to switch to the second or third mode. The UE then sends, to the gNB, an indication that the UE has activated the further CC. The indication of the activation may be comprised in an MAC CE (from the UE to the gNB).

One or more of the examples described above have the advantage that the network is able to utilise HW resources that have become available (or 'freed-up') at the UE. The network is able to utilise the additional resources by scheduling additional data transmissions to the UE (i.e., by scheduling on a further component carrier). In this manner, the data receiving capacity of the UE is maximized, as all of the available HW resources are used. The communications between the network and the UE mean that they are both aligned on the current HW resource availability of the UE, to ensure that the network schedules data for the UE in the most efficient manner.

In some examples, based on RRC signalling between the UE and the NW, the handling of measurement results and decisions on mode transitions is performed at UE side. This has the advantage of increased flexibility for the UE, and reduces the processing burden of the NW.

In some examples, the handling of the UE mode transitions is passed to NW, such that mode transitions are on NW-side. This has the advantage of a greater degree of network control, and reduced processing burden for the UE.

In some examples, the NW controls the mode transitions, but with a reduced RRC signaling by having all CCs configured for all modes. The NW then controls activation and deactivation of CCs. Reduced RRC signalling means that radio resource usage is reduced.

In some examples, the UE is allowed to de-activate CCs due to the UE changing to the first mode. An advantage of this is that the UE is able to react in the quickest way to the UE mode change, and this will also reduce the signalling overhead.

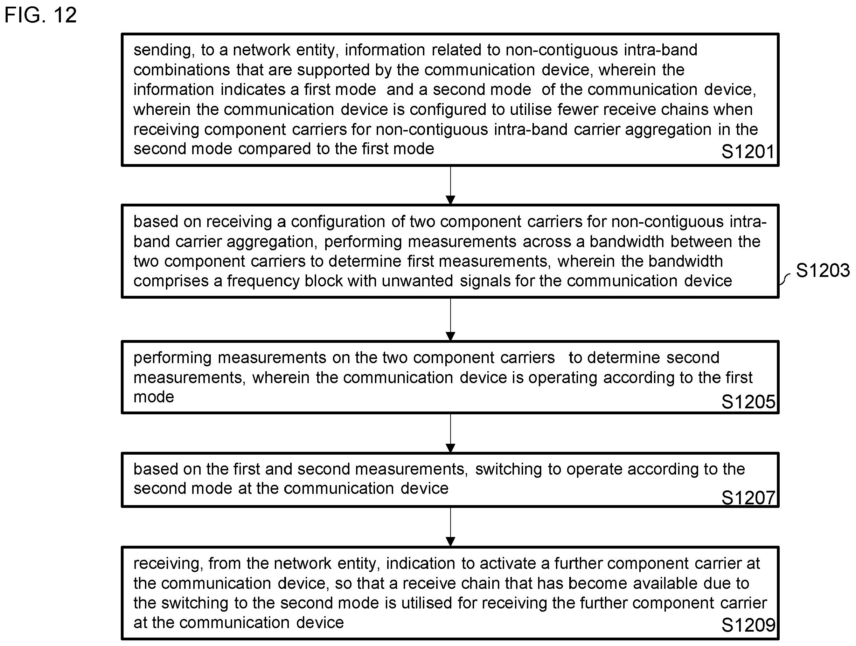

FIG. 12 shows an example method flow performed by an apparatus. The apparatus may be a communication device. For example, the communication device may be a terminal, a UE, or other mobile device. In other examples, the apparatus may be comprised in the communication device.

In S1201, the method comprises: sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode.

In S1203, the method comprises: based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device.

In S1205, the method comprises: performing measurements on the two component carriers to determine second measurements, wherein the communication device is operating according to the first mode.

In S1207, the method comprises: based on the first and second measurements, switching to operate according to the second mode at the communication device.

In S1209, the method comprises: receiving, from the network entity, indication to activate a further component carrier at the communication device, so that a receive chain that has become available due to the switching to the second mode is utilised for receiving the further component carrier at the communication device.

It should be understood that, in some examples, one or more additional method steps are included in the method flow of FIG. 12 and are performed by the apparatus. In some examples, one or more of the method steps of FIG. 12 detailed above may not be performed, or may be performed in a different order.

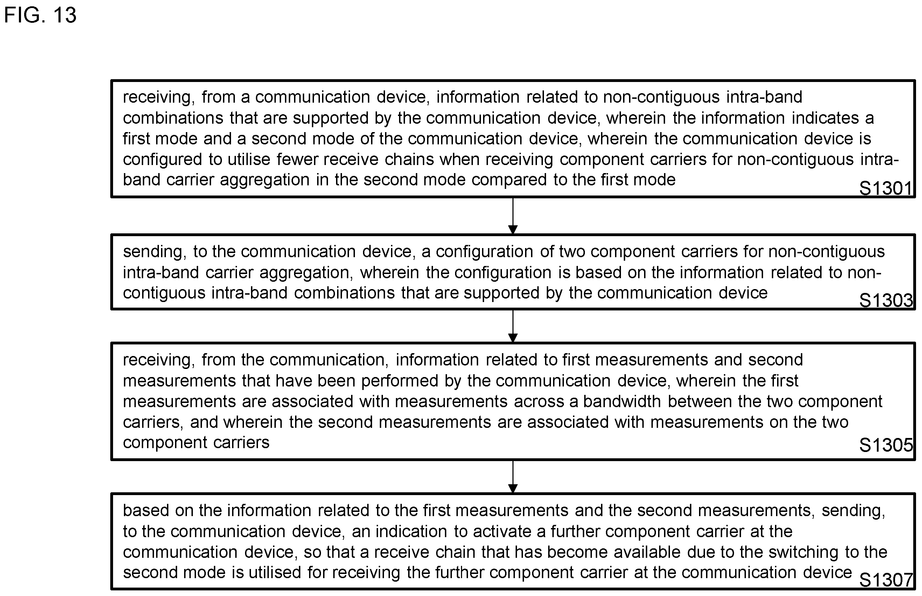

FIG. 13 shows an example method flow performed by an apparatus. The apparatus may be a network entity. For example, the network entity may be a base station, a gNB, or other network node. In other examples, the apparatus is comprised in a network entity.

In S1301, the method comprises: receiving, from a communication device, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode.

In S1303, the method comprises: sending, to the communication device, a configuration of two component carriers for non-contiguous intra-band carrier aggregation, wherein the configuration is based on the information related to non-contiguous intra-band combinations that are supported by the communication device.

In S1305, the method comprises: receiving, from the communication, information related to first measurements and second measurements that have been performed by the communication device, wherein the first measurements are associated with measurements across a bandwidth between the two component carriers, and wherein the second measurements are associated with measurements on the two component carriers.

In S1307, the method comprises: based on the information related to the first measurements and the second measurements, sending, to the communication device, an indication to activate a further component carrier at the communication device, so that a receive chain that has become available due to the switching to the second mode is utilised for receiving the further component carrier at the communication device.

It should be understood that, in some examples, one or more additional method steps are included in the method flow of FIG. 13 and are performed by the apparatus. In some examples, one or more of the method steps of FIG. 13 detailed above may not be performed, or may be performed in a different order.

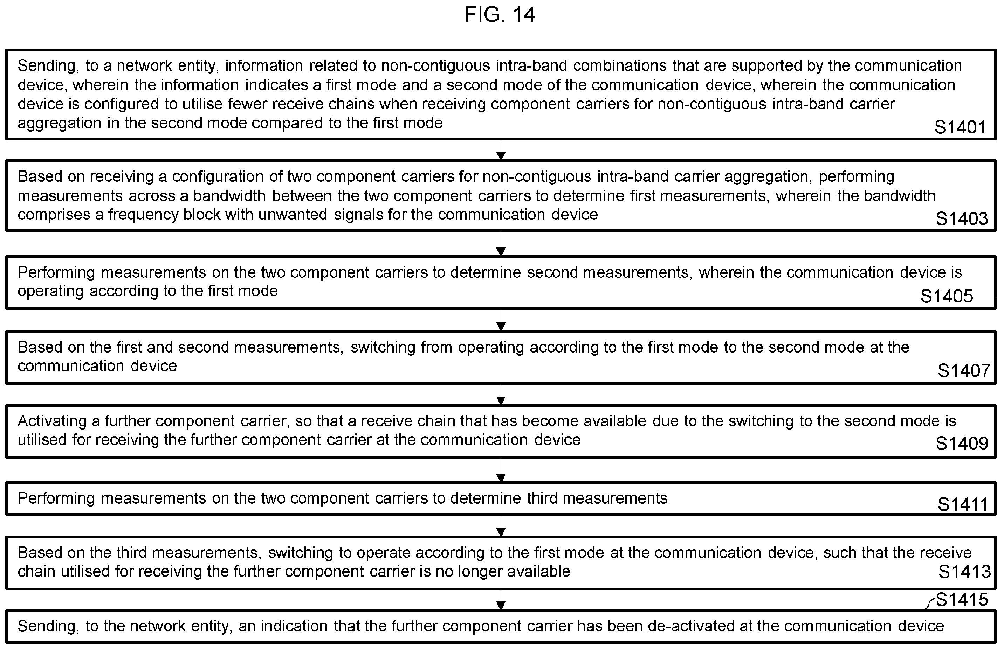

FIG. 14 shows an example method flow performed by an apparatus. The apparatus may be a communication device. For example, the communication device may be a terminal, a UE, or other mobile device. In other examples, the apparatus may be comprised in the communication device.

In S1401, the method comprises: sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode;

In S1403, the method comprises: based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device.

In S1405, the method comprises: performing measurements on the two component carriers to determine second measurements, wherein the communication device is operating according to the first mode.

In S1407, the method comprises: based on the first and second measurements, switching from operating according to the first mode to the second mode at the communication device.

In S1409, the method comprises: activating a further component carrier, so that a receive chain that has become available due to the switching to the second mode is utilised for receiving the further component carrier at the communication device.

In S1411, the method comprises: performing measurements on the two component carriers to determine third measurements.

In S1413, the method comprises: based on the third measurements, switching to operate according to the first mode at the communication device, such that the receive chain utilised for receiving the further component carrier is no longer available.

In S1415, the method comprises: sending, to the network entity, an indication that the further component carrier has been de-activated at the communication device.

It should be understood that, in some examples, one or more additional method steps are included in the method flow of FIG. 14 and are performed by the apparatus. In some examples, one or more of the method steps of FIG. 14 detailed above may not be performed, or may be performed in a different order.

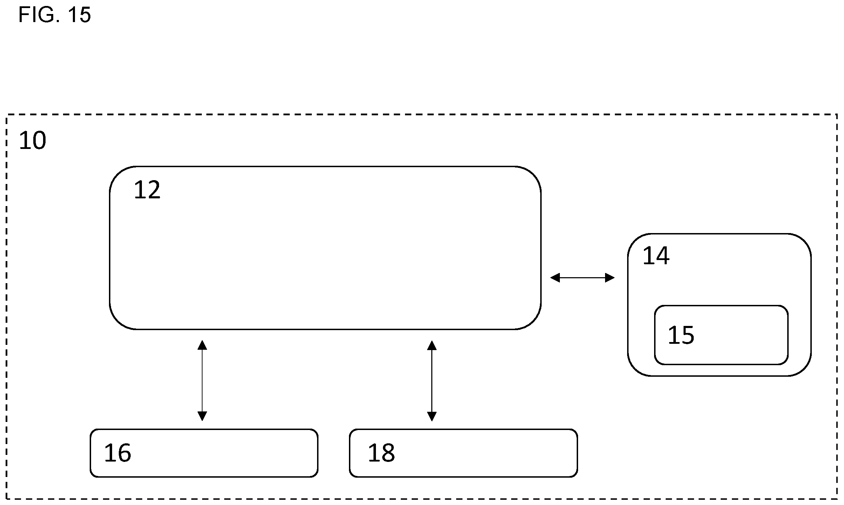

FIG. 15. shows a schematic representation of an apparatus. FIG. 15 shows, by way of example, a block diagram of the apparatus 10. The apparatus 10 comprises, for example, at least one processor 12 and at least one memory 14 storing instructions 15 that, when executed by the at least one processor, cause the apparatus 10 at least to perform the method or methods as disclosed herein, and any of the embodiments thereof. In an example, the at least one memory and the instructions (e.g. a computer program code, software), are configured, with the at least one processor, to cause the apparatus 10 to perform the method or methods as disclosed herein, and any of the embodiments thereof.

A processor 12 may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 14 may be implemented using any suitable data storage technology. The memory may comprise a database for storing data. The memory 14 may be at least in part external to apparatus 10 but accessible to apparatus 10.

The instructions 15 may be comprised in a computer readable medium or a non-transitory computer readable medium. A term non-transitory, as used herein, is a limitation of the medium itself (i.e. tangible, not a signal) as opposed to a limitation on data storage persistency (e.g. random access memory, RAM, vs. read only memory, ROM).

For example, the apparatus 10 is a communication device or terminal device, such as the UE of FIGS. 8 to 11, or the apparatus performing the methods of FIG. 12 or FIG. 14. As another example, the apparatus is comprised in such a communication device, e.g. as a chipset configured to control the communication device. The apparatus 10 may be caused or configured to perform at least the method of FIG. 12 or FIG. 14 and/or any one or more of the examples described herein.

As another example, the apparatus 10 is a network entity (or network node), e.g. the network entity of any of FIGS. 8 to 11. In other examples, the apparatus is comprised in such a network entity, e.g. as a chipset configured to control the network node. The apparatus 10 may be caused or configured to perform at least the method of FIG. 13 and/or any one or more of the examples described herein.

The apparatus may comprise one or more entities of any of protocol layers, such as a MAC entity, an RRC entity, an RLC entity, a PDCP entity or a PHY entity.

The apparatus 10 comprises a radio interface 16. The radio interface 16 may provide the apparatus 10 with communication capabilities. The radio interface 16 may comprise a receiver configured to receive information in accordance with at least one cellular or non-cellular standard. The radio interface 16 may comprise a transmitter configured to transmit information in accordance with at least one cellular or non-cellular standard. The receiver may comprise more than one receiver. The transmitter may comprise more than one transmitter. The radio interface 16 may comprise a transceiver configured to receive and transmit information in accordance with at least one cellular or non-cellular standard. The transceiver may comprise more than one transceiver.

The apparatus 10 may comprise a user interface 18 comprising, for example, at least one of a keypad, a microphone, a touch display, a display, a speaker, etc. The user interface 18 may be used to control the apparatus by the user. The user interface 18 may be external to the apparatus 10. For example, the apparatus 10 may be connected to another device, such as a computer, either via wireless or wired connection, and the apparatus 10 is controlled by the user via the computer.

In an embodiment, at least some of the processes described herein may be carried out by an apparatus comprising means for carrying out at least some of the described processes. Means for performing method steps as disclosed herein may include software and/or hardware components of the apparatus 10. For example, the at least one processor 12, the memory 14, and the computer program code form means for carrying out the method or methods as disclosed herein, and any of the embodiments thereof. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C. It is noted that while the above describes example embodiments, there are several variations and modifications which may be made to the disclosed solution without departing from the scope of the present invention.

The examples may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The term "non-transitory", as used herein, is a limitation of the medium itself (i.e. tangible, not a signal) as opposed to a limitation on data storage persistency (e.g. RAM vs ROM).

As used herein, "at least one of the following:<a list of two or more elements>" and "at least one of: <a list of two or more elements>" and similar wording, where the list of two or more elements are joined by "and", or "or", mean at least any one of the elements, or at least any two or more of the elements, or at least all of the elements.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

As used herein, the terms "means for", "means for performing operations including", "means configured to perform operations including", or "means configured to perform" (or similar) may be any means that are suitable for performing the feature(s). The "means" may be configured to perform one or more of the functions and/or method steps previously described. For example, the "means" may include one or more of: at least one processor, at least one memory, transceiver circuitry, antenna circuitry, etc. It should be understood that these are provided as non-limiting examples.

Alternatively, or additionally some examples may be implemented using circuitry. The circuitry may be configured to perform one or more of the functions and/or method steps previously described. That circuitry may be provided in the base station and/or in the communications device.

As used in this application, the term "circuitry" may refer to one or more or all of the following: (a) hardware-only circuit implementations (such as implementations in only analogue and/or digital circuitry); (b) combinations of hardware circuits and software, such as: (i) a combination of analogue and/or digital hardware circuit(s) with software/firmware and (ii) any portions of hardware processor(s) with software (including digital signal processor(s)), software, and memory(ies) that work together to cause an apparatus, such as the communications device or base station to perform the various functions previously described; and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to uses of the term "means" in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device. The term circuitry also covers, for example and if applicable to the particular claim element, a baseband integrated circuit or processor integrated circuit for a mobile device or a similar integrated circuit in a server, a cellular network device, or other computing or network device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. A communication device comprising:
means for sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode;
means for, based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device;
means for performing measurements on the two component carriers to determine second measurements, wherein the communication device is operating according to the first mode;
means for, based on the first and second measurements, switching from operating according to the first mode to the second mode at the communication device;
means for activating a further component carrier, so that a receive chain that has become available due to the switching to the second mode is utilised for receiving the further component carrier at the communication device;
means for performing measurements on the two component carriers to determine third measurements;
means for, based on the third measurements, switching to operate according to the first mode at the communication device, such that the receive chain utilised for receiving the further component carrier is no longer available; and
means for sending, to the network entity, an indication that the further component carrier has been de-activated at the communication device.

2. The communication device according to claim 1, further comprising:
means for sending, to the network entity, an indication that the further component carrier has been activated at the communication device.

3. The communication device according to claim 1, further comprising:
means for receiving, from the network entity, an indication to activate the further component carrier,
wherein the activating of the further component carrier is performed in response to receiving the indication.

4. The communication device according to any of claims 1 to 3, wherein at least one of: the indication that the further component carrier has been activated, the indication to activate the further component carrier, or the indication that the further component carrier has been de-activated, is comprised in a medium access control control element.

5. The communication device according to any of claims 1 to 4, wherein the switching from operating according to the first mode to the second mode at the communication device is based on comparing: the first measurements to a first threshold, and the second measurements to a second threshold.

6. The communication device according to claim 5, wherein the switching from operating according to the first mode to the second mode at the communication device is based on determining that the first measurements are above the first threshold and the second measurements are below the second threshold.

7. The communication device according to any of claims 1 to 6, further comprising:
means for sending, to the network entity, information related to the switching from operating according to the first mode to the second mode at the communication device.

8. The communication device according to claim 7, wherein the information comprises an indication of hardware resources that are available at the communication device.

9. The communication device according to any of claims 1 to 8, further comprising:
means for receiving, from the network entity, information related to a configuration for a further component carrier, wherein the further component carrier is to be received by the communication device.

10. The communication device according to any of claims 1 to 9, further comprising:
means for sending, to the network entity, information related to the first and second measurements,
wherein the switching from operating according to the first mode to the second mode at the communication device is based on an indication received from the network entity.

11. The communication device according to any of claims 1 to 10, further comprising:
means for performing measurements across the bandwidth between the two components carriers to determine fourth measurements.

12. The communication device according to claim 11, further comprising:
means for, based on comparing the fourth measurements to a fourth threshold, switching from operating according to the second mode to a third mode at the communication device.

13. The communication device according to any of claims 1 to 12, further comprising: means for receiving, from the network entity, the configuration of the two component carriers for non-contiguous intra-band carrier aggregation; and
means for, based on receiving an indication from the network entity, activating the configuration of the two component carriers for non-contiguous intra-band carrier aggregation.

14. A method performed by a communication device, the method comprising:
sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode;
based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device;
performing measurements on the two component carriers to determine second measurements, wherein the communication device is operating according to the first mode;
based on the first and second measurements, switching from operating according to the first mode to the second mode at the communication device;
activating a further component carrier, so that a receive chain that has become available due to the switching to the second mode is utilised for receiving the further component carrier at the communication device;
performing measurements on the two component carriers to determine third measurements;
based on the third measurements, switching to operate according to the first mode at the communication device, such that the receive chain utilised for receiving the further component carrier is no longer available; and
sending, to the network entity, an indication that the further component carrier has been de-activated at the communication device.

15. A computer program comprising instructions, which when executed by an communication device, cause the communication device to perform at least the following:
sending, to a network entity, information related to non-contiguous intra-band combinations that are supported by the communication device, wherein the information indicates a first mode and a second mode of the communication device, wherein the communication device is configured to utilise fewer receive chains when receiving component carriers for non-contiguous intra-band carrier aggregation in the second mode compared to the first mode;
based on receiving a configuration of two component carriers for non-contiguous intra-band carrier aggregation, performing measurements across a bandwidth between the two component carriers to determine first measurements, wherein the bandwidth comprises a frequency block with unwanted signals for the communication device;
performing measurements on the two component carriers to determine second measurements, wherein the communication device is operating according to the first mode;
based on the first and second measurements, switching from operating according to the first mode to the second mode at the communication device;
activating a further component carrier, so that a receive chain that has become available due to the switching to the second mode is utilised for receiving the further component carrier at the communication device;
performing measurements on the two component carriers to determine third measurements;
based on the third measurements, switching to operate according to the first mode at the communication device, such that the receive chain utilised for receiving the further component carrier is no longer available; and
sending, to the network entity, an indication that the further component carrier has been de-activated at the communication device.
